# EUROPÄISCHE PATENTSCHRIFT

(11) **EP 2 473 858 B1**
(45) Veröffentlichungstag und Bekanntmachung des Hinweises auf die Patenterteilung: **14.11.2018**
(21) Anmeldenummer: 10763589.8
(22) Anmeldetag: 27.08.2010
(51) Int. Cl.: G01Q 60/16, G01Q 30/12

(54) **VERFAHREN ZUR MESSUNG DER KRAFTWECHSELWIRKUNG, WELCHE DURCH EINE PROBE HERVORGERUFEN WIRD**
METHOD OF MEASUREMENT OF AN INTERACTION, WHICH IS CAUSED BY A SAMPLE
MÈTHODE DE MESURE D'UNE INTERATION, QUI EST CAUSÉE PAR UN'ÉCHANTILLON

(30) Priorität: 03.09.2009 DE 102009039840
(43) Veröffentlichungstag der Anmeldung: 11.07.2012
(73) Patentinhaber: Forschungszentrum Jülich GmbH, 52425 Jülich (DE)
(72) Erfinder: TEMIROV, Ruslan, 50999 Köln (DE); WEISS, Christian, 45276 Essen (DE); TAUTZ, Frank, Stefan, 52066 Aachen (DE)
(86) Internationale Anmeldenummer: PCT/DE2010/001004
(87) Internationale Veröffentlichungsnummer: WO 2011/026464

(56) Entgegenhaltungen:
- EP-A1- 1 712 893
- WO-A2-2009/062631
- GB-A- 2 267 761
- TEMIROV R ET AL: "A novel method achieving ultra-high geometrical resolution in scanning tunnelling microscopy", NEW JOURNAL OF PHYSICS, INSTITUTE OF PHYSICS PUBLISHING, BRISTOL, GB, Bd. 10, Nr. 5, 1. Mai 2008 (2008-05-01), Seite 53012, XP020137768, ISSN: 1367-2630

## Beschreibung

Die Erfindung betrifft ein Verfahren zur Messung der Kraftwechselwirkung, welche durch eine Probe hervorgerufen wird, insbesondere für ein Rastertunnelmikroskop, sowie ein Rastertunnelmikroskop.

### Stand der Technik

Das Rastertunnelmikroskop (STM) und seine Funktionsweise sind allgemein bekannt und verstanden. Das Rastertunnelmikroskop erreicht aufgrund seiner konstruktiven Besonderheiten laterale Ortsauflösungen im Bereich von bis zu 0,1 Å und erlaubt damit die Visualisierung von Nanostrukturen durch Topographie und / oder lokale elektronische Zustandsdichte im Bereich der Valenzelektronen.

Das Rasterkraftmikroskop (AFM) nutzt die Kraftwechselwirkung zwischen einer Spitze und einer Probe zur Abbildung der Probenoberfläche. Anders als beim STM gibt es beim AFM eine Vielzahl grundsätzlich unterschiedlicher Bauformen und Betriebsmodi, die sich in der Art der Kraftdetektion voneinander unterscheiden. Diese Vielzahl spiegelt die Versuche wieder, die Auflösung des AFM in den Bereich der atomaren Auflösung hinein zu verbessern, was sich nachteilig aber als außerordentlich schwierig gestaltet.

In allen Fällen der Rasterkraftmikroskopie wird die Kraft oder eine von ihr abgeleitete Größe als Regelgröße benutzt, um eine Feedbackschleife zu betreiben. Die wichtigsten der herkömmlichen Betriebsmodi sind:
a) das statische AFM:
   Eine Spitze, die am Ende eines weichen Biegebalkens als sogenannter Cantilever angebracht ist, wird im Kontakt (Kontakt-Modus) oder berührungslos (Nicht-Kontakt-Modus) über die Probe geführt, wobei die Wechselwirkungskraft als Verbiegung des Cantilevers gemessen wird. Die gebräuchliche Bauform des statischen AFM ist das Biegebalken-AFM, meist mit optischer Detektion der Cantilever-Verbiegung.
b) der Tapping-Modus:
   Dieser Modus kann in unterschiedlichen Bauformen eingesetzt werden. Eine Spitze schwingt über einer Oberfläche und kommt dabei immer wieder mit dieser in Kontakt.
c) der berührunglose Modus:
   Hierbei wird die Wechselwirkung zwischen Spitze und Probe gemessen, ohne dass beide in Kontakt kommen. Dabei wird der Sensor oft in Schwingung versetzt, um einen "jump to contact" zu verhindern. Dies wird dann auch als dynamisches AFM bezeichnet. Vier verschiedene Kraftsensoren werden beim dynamischen AFM verwendet: Cantilever, QPlus Sensor, Needle Sensor und Stimmgabel, wobei man sie grob in zwei Kategorien einteilen kann, je nachdem ob sie mechanisch oder elektrisch angetrieben werden. Gemessen wird die Frequenz- oder Amplitudenverschiebung des Kraftsensors. Ein wichtiger Vorteil aller oben genannten Ausprägungen des AFM ist die Möglichkeit, auch auf nichtleitenden Proben uneingeschränkt messen zu können.

In den letzten Jahren sind verschiedenste Anstrengungen unternommen worden, die laterale Auflösung des AFM zu verbessern, hin zu einer (sub-)atomaren bzw. submolekularen Auflösung. Bisher am erfolgreichsten ist auf diesem Weg die dynamische Rasterkraftmikroskopie, die im Vergleich zum STM nachteilig einen hohen apparativen Aufwand bedingt.

Ein Nachteil der Rastertunnelmikroskopie ist andererseits die fehlende chemische Sensitivität, das heißt STM erlaubt keine Identifikation chemischer Spezies, was dazu führt, dass man molekulare Objekte und Oberflächenstrukturen im lateralen Größenbereich bis unter ein Angström zwar abbilden, aber nicht chemisch oder andersartig identifizieren kann.

Zusammenfassend bietet das konventionelle STM den geringeren experimentellen Aufwand als das hochauflösende dynamische AFM, nachteilig allerdings ohne chemische Information. Das hochauflösende dynamische AFM wiederum bietet weitergehende Informationen über die Probenoberfläche als das STM, unter anderem auch chemischer Art, allerdings nachteilig verbunden mit höherem experimentellen und apparativen Aufwand

Temirov et al. in "A novel method achieving ultra-geometrical resolution in scanning tunnelling microscopy", New Journal of Physics, Band 10 (2008), 053012, XP20137768, und WO2009/062331 A2 beschreiben ein Verfahren zur Untersuchung einer Probe mit einem Rastertunnelmikroskop, wobei ein Wasserstoffmolekül als Kontrastmittel verwendet wird.

### Aufgabe und Lösung

Aufgabe der Erfindung ist es daher, ein Verfahren zur Messung der Kraftwechselwirkung, welche durch eine Probe hervorgerufen wird, bereit zu stellen.

Die Aufgabe wird durch ein Verfahren nach Anspruch 1 gelöst. Vorteilhafte Ausgestaltungen ergeben sich aus den darauf rückbezogenen Ansprüchen.

### Gegenstand der Erfindung

Das Verfahren sieht die Messung der Kraftwechselwirkung, welche durch eine Probe hervorgerufen wird, vor. Dabei wird eine Spitze mit einer Biasspannung gegen die Probe beaufschlagt und in einen so geringen Abstand zu der Probe geführt, dass ein messbarer Strom zwischen der Spitze und der Probe fließt. Während des erfindungsgemäßen Verfahrens wird ein Sensor und Signalwandler S im Bereich der Kraftwechselwirkung gebildet. Der Sensor und Signalwandler S verändert den durch den Spitze-Probe-Kontakt fließenden Strom in Abhängigkeit von der Stärke der Kraftwechselwirkung. Das Verfahren wird in unmittelbarer Nähe zur Probe bzw. Spitze ausgeführt.
Probe und Spitze sollen vorzugsweise elektrisch leitend bzw. zumindest halbleitend sein.

In einer Ausgestaltung der Erfindung kombiniert diese Rasterkraft- und Rastertunnelmikroskopie auf eine neue Weise, indem sie den Sensor und Signalwandler S auf nanoskopische Dimensionen reduziert und an den Spitze-Probe-Kontakt, vorzugsweise eines Rastertunnelmikroskops, verlegt. Dies kombiniert bestimmte Vorteile sowohl des AFM als auch des STM. Nanoskopisch meint dabei im wesentlichen kleiner als 1 Nanometer.
Es wurde erkannt, dass ein nanoskopischer, durch die zu messende Kraftwechselwirkung beeinflussbarer Sensor und Signalwandler S von sich aus unempfindlich gegen von der Probe ausgehende langreichweitige Kräfte ist, die die atomare Auflösung mit makroskopischen Sensoren, wie sie im AFM verwendet werden, nachteilig sehr schwierig gestalten.
Es wurde erkannt, dass die Stromdetektion im Rastertunnelmikroskop eine überlegene laterale Auflösung ermöglicht und daher auch in der Kraftmikroskopie eine Signalwandlung des Kraftwechselwirkungssignals in ein Stromsignal bereits im Bereich des Spitze-Probe-Kontakts vorteilhaft ist. Unter einer Spitze wird erfindungsgemäß jedes Element verstanden, welches bezüglich der Kraftwechselwirkung mit der Probe ein definiertes Wechselwirkungszentrum darstellt und in welchem sich bei Anlegen einer Spannung der zwischen Spitze und Probe fließende Strom konzentriert.

Die Aufgabe wird dadurch gelöst, dass der Sensor S zugleich als ein Signalwandler ausgebildet wird, der das Kraftwechselwirkungssignal in ein Stromsignal umsetzt. Dieses wird dann z. B. mit Hilfe einer gewöhnlichen STM Elektronik gemessen. Der Sensor und Signalwandler S folgt dabei den Änderungen der Kraftwechselwirkung, die von der Probe ausgehen, bis in den (sub-)atomaren und in den intermolekularen Bereich der Bindungskräfte. Der Sensor setzt die auf Grund der atomar-geometrischen, chemischen Struktur der Probe auftretenden Änderungen als Signalwandler vorteilhaft in messbare Stromsignale um.

Sofern an lateral verschiedenen Positionen der Probe das Verfahren wiederholt wird, wird die Erstellung von Kraftwechselwirkungskarten ermöglicht. Vorteilhaft wird dadurch die atomar-geometrische, chemische Struktur der Probe und / oder intermolekulare Bindungen nachgewiesen.

Da der Sensor und Signalwandler S durch die Krafteinwirkung veränderbar bzw. beeinflussbar ist, kann dieser als Resultat der Veränderung oder Beeinflussung den Strom durch den Spitze-Probe-Kontakt verändern. Die Veränderung eines zwischen einer Spitze und einer Probe fließenden Stroms lässt sich mit sehr guter Ortsauflösung verhältnismäßig einfach bis hinab in atomare Dimensionen messen. Demgegenüber ist der Aufwand der mechanischen Messung von Kraftwechselwirkungen nach dem Stand der Technik, beispielsweise in einem Rasterkraftmikroskop, deutlich größer. Indem erfindungsgemäß die Kraftwechselwirkung in eine Veränderung des Stroms durch den Spitze-Probe-Kontakt zurückgeführt wird, wird auch deren Messung auf die Messung eines Stroms zurückgeführt und somit in die Domäne verlagert, in der ein relativ einfaches Instrumentarium für Messungen mit hoher Ortsauflösung, wie beispielsweise das Rastertunnelmikroskop, existiert. Der Sensor und Signalwandler S ist damit bei dem erfindungsgemäßen Verfahren nicht nur ein reiner Sensor, der die Kraftwechselwirkung aufnimmt, sondern auch ein echter Signalwandler (Transducer), der diese Veränderung in die Veränderung eines Stroms übersetzt.

Der Sensor und Signalwandler S kann in situ im Spitze-Probe-Kontakt eines STM gebildet werden. Das STM weist die Mittel zur Messsung des durch den Sensor S veränderten Stroms auf. Es nimmt an einem Punkt X, Y der Probe den Strom auf. Sodann kann das Verfahren durch rastern wiederholt werden, solange bis ganze Kraftwechselwirkungskarten von Proben auf Basis des ortsaufgelösten Stroms erstellt werden. Dies ist Grundlage für die Abbildung des atomar-geometrischen, chemischen Kontrasts und /oder der intermolekularen Wechselwirkung der Probe.

Unterschiedliche Wege der Signalwandlung können genutzt werden. Die Signalwandlung kann z. B. dadurch geschehen, dass der Sensor und Signalwandler S unter der Wirkung der Kraft, z.B. durch elastische Verformung, oder durch eine Verspannung, oder durch eine Änderung der Potentiallandschaft, oder durch einen anderen Mechanismus beeinflusst wird, und dies zu einer Veränderung insbesondere des differentiellen Leitwerts des Spitze-Probe-Kontakts führt. Dies ist vorteilhaft, weil der differentielle Leitwert eines Nanokontakts sehr empfindlich von Eigenschaften dieses Kontakts abhängt.

Der Spitze-Probe-Kontakt ist dabei nicht auf einen exponentiellen Zusammenhang zwischen Strom und Abstand beschränkt. Ebenso kann die Veränderung des Leitwerts als Funktion der Kraftwechselwirkung je nach Ausprägung des Sensors und Signalwandlers S beliebige, das heißt andere als exponentielle funktionelle Abhängigkeiten zeigen. Auch ist der Spitze- Probe-Kontakt nicht auf das Tunnelregime beschränkt. Andere Transportregimes, z. B. mit einem beidseitig, das heißt zu Spitze und Probe, kontaktierten Sensor, in denen gegebenenfalls ein Teil des Stroms über den Sensor fließt, sind möglich.

Die Erfindung ist ferner nicht auf ein Rastertunnelmikroskop beschränkt. So entsteht beispielsweise in einem Bruchkontakt auch ein System aus Spitze und Probe im Sinne der Erfindung, in dem die Erfindung einsetzbar ist. Dabei wird unter einem Bruchkontakt folgendes verstanden: Eine elektrisch leitende oder halbleitende Struktur wird auf einem biegsamen Substrat angeordnet und dieses Substrat anschließend aus seiner Ebene heraus durchgebogen. Dabei bildet sich eine Nahtstelle heraus, die mit zunehmender Durchbiegung immer dünner wird und an der die Struktur schließlich in zwei elektrisch voneinander getrennte Teile zerreißt. Wird nun die Durchbiegung reduziert, so nähert sich ein definiertes Wechselwirkungszentrum des einen Teils dem anderen Teil immer weiter an, bis schließlich wieder ein elektrischer Strom zwischen beiden Teilen fließen kann. In der Regel haben beide Teile ein definiertes Wechselwirkungszentrum, und die beiden Wechselwirkungszentren nähern sich einander an, wenn die Durchbiegung verringert wird. Ein Teil mit einem Wechselwirkungszentrum ist eine Spitze im Sinne dieser Erfindung, der andere Teil ist die Probe.

In einer weiteren Ausgestaltung der Erfindung wird der Sensor und Signalwandler S im Spitze-Probe-Kontakt adsorbiert, kondensiert und/oder resublimiert.

In einer vorteilhaften Ausgestaltung der Erfindung wird die Spitze in einem Rastertunnelmikroskop (STM) zu der Probe geführt. Dann ist nicht nur der Abstand zwischen Spitze und Probe bis in subatomare Dimensionen steuerbar, sondern die Spitze kann mit vergleichbarer Präzision auch lateral über die Probe gerastert werden. Damit ist es möglich, die Kraftwechselwirkung nicht nur an einem Ort zu messen, sondern die räumliche Verteilung dieser Kraftwechselwirkung zu erfassen. Diese Verteilung kann als Bild dargestellt werden, das die gleiche Art Information enthält wie ein mit einem Rasterkraftmikroskop (AFM) aufgenommenes Bild, allerdings erfindungsgemäß mit deutlich geringerem apparativen Aufwand. Wenn z. B. der Sensor S so nah an die Probe herangeführt wird, dass er auf die Pauli-Abstoßung reagiert, dann ergeben sich Bilder, die die atomar-geometrische, chemische Struktur der Probe oder sogar intermolekulare Bindungen einer zu untersuchenden Probe wiedergeben, mit unerreichter Auflösung.

Somit fällt die Erfindung unter anderem in das Gebiet der höchstauflösenden Mikroskopie mit Rastersondenverfahren. Die Erfindung beschreibt das Verfahren und ein Rastertunnelmikroskop. Der nanoskopische Kraftwechselwirkungssensor, der zugleich als Signalwandler S fungiert, liefert kraftmikroskopische Bilder von molekularen Objekten und atomaren Oberflächenstrukturen anderer kondensierter Objekte mit im STM bisher unerreichter Auflösung. Dabei tritt der atomar-geometrische, chemische Kontrast deutlich hervor. Der Sensor und Signalwandler S bleibt dabei als echtes Kontrastmittel unverändert.

Das Verfahren erlaubt die Identifikation von nanoskaligen Objekten anhand ihrer chemischen, atomar-geometrischen Struktur. Die Erfindung stellt damit eine neue Variante der Kraftmikroskopie dar, die im Grundsatz quantifizierbare Kräfte liefern kann.

In einer weiteren vorteilhaften Ausgestaltung der Erfindung werden die Spitze und die Probe koplanar auf einem Substrat angeordnet. Die Spitze kann dann beispielsweise zu der Probe geführt werden, indem die Durchbiegung des Substrats aus seiner Ebene heraus verändert wird. Eine koplanare Anordnung von Spitze und Probe kann beispielsweise in einem Bruchkontakt wie oben beschrieben realisiert werden. Mit dieser Ausgestaltung können die Eigenschaften des Materials der Struktur besonders einfach und schnell studiert werden, wenn nur das Verhalten des Materials in einem möglichst kleinen Wechselwirkungszentrum studiert werden soll und die räumliche Verteilung dieses Verhaltens ohne Belang ist.

In einer besonders vorteilhaften Ausgestaltung der Erfindung wird ein Sensor und Signalwandler S gebildet, der zumindest einen Teil des zwischen Spitze und Probe fließenden Stroms trägt und dessen Leitwert durch die Kraftwechselwirkung veränderlich ist. Der Leitwert kann beispielsweise durch Änderung des effektiven Abstands des Sensors zur Probe veränderlich sein. Dies kann beispielsweise realisiert werden, indem ein Sensor gewählt wird, der durch die Kraftwechselwirkung deformierbar ist. Der effektive Abstand zur Probe hat einen besonders starken Einfluss auf den vom Sensor getragenen Strom, wenn der zwischen Spitze und Probe fließende Strom einen Anteil enthält, der ein quantenmechanischer Tunnelstrom ist.

In einer besonders vorteilhaften Ausgestaltung der Erfindung wird ein Sensor und Signalwandler S gebildet, dessen Einfluss auf den Tunnelstrom im Spitze-Probe-Kontakt durch die Kraftwechselwirkung veränderlich ist. Dies kann beispielsweise durch eine Veränderung der Lage und/oder des Bewegungszustands des Sensors im Zwischenraum zwischen Spitze und Probe geschehen. Beispielsweise können die Veränderung der Lage und des Bewegungszustand des Sensors und Signalwandlers S die elektronischen Eigenschaften von Spitze und/oder Probe so verändern, dass die Tunnelwahrscheinlichkeit für Elektronen zwischen Spitze und Probe verändert wird.

Daher wird in einer besonders vorteilhaften Ausgestaltung der Erfindung ein Tunnelkontakt zwischen der Spitze und der Probe hergestellt. Es lässt sich dann vorteilhaft auswerten, inwieweit die Abhängigkeit des Leitwerts vom Abstand zwischen Spitze und Probe von der Exponentialform abweicht. Es wurde erkannt, dass diese Abweichung im Wesentlichen auf den Einfluss des Sensors und Signalwandlers S auf den Strom durch den Spitze-Probe-Kontakt zurückgeht, der auf Grund der Kraftwechselwirkung veränderlich ist. Insbesondere kann dieser Strom einen Anteil enthalten, der proportional zur Kraftwechselwirkung ist, oder einer anderen funktionellen Abhängigkeit folgt.

In einer besonders vorteilhaften Ausgestaltung der Erfindung wird die Abhängigkeit des Stroms von der Biasspannung gemessen. Es wurde erkannt, dass der Durchgriff einer Veränderung der Kraftwechselwirkung auf den Einfluss des Sensors und Signalwandlers S auf den Stromfluss über die Biasspannung eingestellt werden kann. Daher wird in einer weiteren vorteilhaften Ausgestaltung der Erfindung der Durchgriff einer Veränderung der Kraftwechselwirkung auf den Einfluss des Sensors und Signalwandlers S auf den Stromfluss über die Biasspannung eingestellt. Durch Variation der Biasspannung kann somit die Empfindlichkeit des Sensors und Signalwandlers S auf elektrischem Wege eingestellt werden. Dies ist vergleichbar damit, dass in einem Rasterkraftmikroskop (AFM) die elastischen Eigenschaften des Biegebalkens (Cantilever), an dessen Ende sich die Spitze befindet, stufenlos auf elektrischem Wege variiert werden können. Einen solchen Komfort bieten Rasterkraftmikroskope nach dem Stand der Technik nicht. Stattdessen muss hierfür der Biegebalken einschließlich der daran befindlichen Spitze komplett ausgewechselt werden, was regelmäßig einen manuellen Eingriff erfordert, insbesondere wenn sich das Mikroskop im Ultrahochvakuum befindet. Durch Variation der Biasspannung kann insbesondere diejenige Biasspannung bestimmt werden, bei der diejenigen Eigenschaften der Probe, die bei der aktuellen Untersuchung zu studieren sind, besonders stark ausgeprägt sind.

Diese Erkenntnis kommt auch in der vorteilhaften Ausgestaltung der Erfindung zum Tragen, in der der Durchgriff einer Veränderung der Kraftwechselwirkung auf den Einfluss des Sensors und Signalwandlers S auf den Stromfluss über die Biasspannung eingestellt wird. Beispielsweise kann mit derjenigen Biasspannung, die sich unter Nutzung der vorgenannten Ausgestaltung als die für die aktuelle Untersuchung vorteilhafteste herausgestellt hat, die räumliche Verteilung der Kraftwechselwirkung erfasst und als Bild aufgezeichnet werden.

Vorteilhaft wird die Kraftwechselwirkung gemessen, nachdem sich in dem Spitze und Probe umfassenden Stromkreis symmetrisch um die Biasspannung Null für mindestens ein Biasspannungspaar aus einem positiven und einem negativen Wert ein Maximum oder ein Minimum im negativen differentiellen Leitwert eingestellt hat. Dies hat sich als zuverlässige Startkonfiguration herausgestellt, in der regelmäßig eine Veränderung des zwischen Spitze und Probe fließenden Stroms durch die Kraftwechselwirkung experimentell beobachtbar ist. Vorteilhaft wird daher vor der Messung der Kraftwechselwirkung eine Biasspannung mit einem Betrag von etwa 100 mV oder weniger gewählt. Während der Messung der Kraftwechselwirkung wird dann bevorzugt eine Biasspannung mit einem Betrag von 40 mV oder weniger, bevorzugt mit einem Betrag von 10 mV oder weniger, 5mV oder weniger oder insbesondere weniger als 1 mV gewählt.

In einer weiteren vorteilhaften Ausgestaltung der Erfindung werden der Strom, der Leitwert und/oder der differentielle Leitwert in Abhängigkeit des Abstands zwischen der Spitze und der Probe gemessen. Eigenschaften der Probe oder auch die Art und Weise, auf welche die Kraftwechselwirkung zwischen Sensor und Probe physikalisch zu Stande kommt, haben in der Regel einen Einfluss darauf, wie der Strom, der Leitwert und/oder der differentielle Leitwert vom Abstand zwischen Spitze und Probe abhängen. Um diese Eigenschaften oder auch die Art der Kraftwechselwirkung zu rekonstruieren, können insbesondere mehrere der genannten Abstandsabhängigkeiten simultan gemessen werden.

In der Erfindung wird ein Sensor und Signalwandler S gebildet, der ein aus zwei Atomen bestehendes Molekül, vorzugsweise des gleichen Elements, umfasst. Insbesondere kann hierfür Wasserstoff (H oder H₂) oder Deuterium (D oder D₂) oder Helium, oder CO als Material für den Sensor und Signalwandler S gewählt werden.
In einer weiteren besonders vorteilhaften Ausgestaltung der Erfindung umfasst der Sensor und Signalwandler S Atome oder Moleküle mit geschlossener Schale, weil dieser die Elektronen in Spitze und / oder Probe polarisieren kann.
In einer besonders vorteilhaften Ausgestaltung der Erfindung wird der Sensor und Signalwandler S zumindest zum Teil aus einem Gas gebildet, welches zur Spitze und / oder zur Probe geführt wird, während diese kälter ist als die Kondensations-, Adsorptions- und/oder Resublimationstemperatur des Gases. Dieses Verfahren ist insbesondere dann anwendbar, wenn die Spitze bei der Durchführung des Verfahrens Bestandteil eines Rastertunnelmikroskops ist. Das Mikroskop befindet sich in der Regel im Ultrahochvakuum. Vor der Inbetriebnahme des Mikroskops ist es in der Regel erforderlich, sowohl die Probe als auch die Spitze mit aggressiven, Material abtragenden Verfahren zu präparieren, die einen zuvor aufgebrachten Sensor entfernen könnten. Indem nun ein Gas an der kalten Spitze und/oder Probe vorgelegt wird, lagert es sich dort in flüssiger oder fester Form an oder adsorbiert dort in Form einzelner Moleküle respektive Atome. Diese Anlagerungen werden als Sensor und Signalwandler S für die Untersuchung der Probe verwendet. Der gebildete Sensor und Signalwandler S ist somit ein Sensor, der erst in-situ nach dem Säubern von Probe und Spitze hergestellt wurde und somit anders als herkömmliche Sensoren nicht durch dieses Säubern entfernt wurde. Dabei ist es insbesondere möglich, dass sich das Gas an vielen Stellen auf der Spitze und / oder Probe anlagert und im Spitze-Probe-Kontakt den Sensor und Signalwandler S bildet.

In einer weiteren besonders vorteilhaften Ausgestaltung der Erfindung wird ein Sensor und Signalwandler S gebildet, während dieser auf der Spitze und / oder Probe physisorbiert. Dort bildet es den Sensor und Signalwandler S, weil er durch Veränderung seiner Position im Spitze-Probe-Kontakt und/oder seines Bewegungszustands empfindlich auf Veränderungen der Kraftwechselwirkung reagieren kann, und auch bei lateraler Verschiebung der Spitze gegen die Probe der Spitze gut folgen kann.
In einer weiteren vorteilhaften Ausgestaltung der Erfindung wird ein Sensor und Signalwandler S gebildet, der in fester und / oder flüssiger Form eine hohe Kompressibilität besitzt, zum Beispiel dadurch, dass er starke Nullpunktschwingungen ausführt, weil sein Bewegungszustand dann empfindlich auf Veränderung des Kraftwechselwirkungspotentials vor der Probe reagiert.
In einer weiteren, besonders vorteilhaften Ausgestaltung der Erfindung wird ein Sensor und Signalwandler S insbesondere durch ein Gas gebildet, dessen Adsorption auf den kalten Oberflächen von Spitze und Probe selbstjustierend ist. Dadurch wird verhindert, dass eine zu große Bedeckung von Spitze und / oder Probe mit kondensiertem oder resublimiertem Gas auftritt und sich nachteilig auf die Bildung eines effektiven Sensors und Signalwandlers S auswirkt.
In einer ganz besonders vorteilhaften Ausgestaltung der Erfindung hat der Sensor und Signalwandler S im Spitze-Probe-Kontakt einen wohldefinierten Adsorptionsplatz, weil dadurch ein stabiler Sensor und Signalwandler S gebildet werden kann.

Mittels des Sensors und Signalwandlers S kann eine quantitative Kraftmessung erfindungsgemäß erfolgen, indem man das Sensor-Signalwandlersystem mit Hilfe einer theoretischen Simulation kalibriert. Alternativ kann man den Sensor und Signalwandler S durch einmalige Verwendung eines dynamischen AFM kalibrieren. Zu diesem Zweck wird der Sensor an der Spitze eines dynamischen AFM platziert, mit dem gleichzeitig der Tunnelstrom gemessen wird.
Durch die Erfindung ist es vorteilhaft zum ersten Mal gelungen, ein Rastertunnelmikroskop zum Nachweis von Kräften mit der Rastertunnelmikroskop eigenen hohen Ortsauflösung zu verbinden.

Das Rastertunnelmikroskop umfasst eine Spitze, welche mit einer Bias-spannung gegen eine zu untersuchende Probe beaufschlagt und in einem so geringen Abstand zu der Probe geführt werden kann, dass ein Strom zwischen der Spitze und der Probe fließen kann. Vorteilhaft weist das Rastertunnelmikroskop einen Sensor und Signalwandler S für eine durch eine Probe hervorgerufene Kraftwechselwirkung auf. Der Sensor und Signalwandler S verändert zumindest einen Teil des durch den Spitze-Probe-Kontakt fließenden Stroms in Abhängigkeit von der Kraftwechselwirkung.

Das Rastertunnelmikroskop weist per se die Mittel zur Messung des Stroms in Abhängigkeit der von der Probe ausgehenden Kraftwechselwirkungen auf. Mittels des Sensors und Signalwandlers S werden aber erstmalig detaillierte Abbildungen zur atomar-geometrischen, chemischen Struktur ermöglicht.
Das Mikroskop weist besonders vorteilhaft eine laterale Auflösung von 0,01 nm oder besser auf. Es weist auch die Mittel auf, um die X, Y-Datensätze des Stroms in Abhängigkeit von der Kraftwechselwirkung in Abbildungen zum atomar-geometrischen, chemischen Kontrast der Probe zu transformieren. Es hat daher eine chemische Sensitivität, mit der zum Beispiel organische Moleküle an Hand ihrer atomar-geometrischen, chemischen Struktur voneinander unterschieden werden können. Außerdem können intermolekulare Wechselwirkungen sichtbar gemacht und untersucht werden.
Hierzu weist das Rastertunnelmikroskop einen Sensor und Signalwandler S auf, welcher an der Spitze und / oder der Probe adsorbiert, kondensiert und/oder resublimiert bzw. physisorbiert ist.

### Spezieller Beschreibungsteil

Nachfolgend wird der Gegenstand der Erfindung anhand von sechs Figuren näher erläutert, ohne dass der Gegenstand der Erfindung dadurch beschränkt wird.

Es zeigen:
- Fig. 1:: Vergleich zwischen einem nach herkömmlicher STM (a) aufgenommenen Bild und dem erfindungsgemäßen, chemisch sensitiven Auflösungsverfahren (b, c) am Beispiel eines Modellmoleküls.
- Fig. 2:: IU-Kennlinie und differentieller Leitwert dI/dU bei der Abbildung eines Modellmoleküls während des erfindungsgemäßen Verfahrens.
- Fig. 3:: Chemische Strukturen von organischen Adsorbaten, die mit dem erfindungsgemäßen Verfahren und dem atomar-geometrischen, chemischen (STHM-) Kontrast aufgenommen wurden. STHM Bilder von
a) 3,4,9,10-Perylenetetracarbonsäuredianhydrid (PTCDA) adsorbiert auf Au(111),
b) Pentacene/Ag(111),
c) Sn-Phtaloocyanine/Ag(111).
   Bilder a - c werden zusammen mit der jeweiligen Strukturformel abgebildet.
d) eine Lage von PTCDA Molekülen auf Au(111). Das molekulare Gerüst (schwarz) inklusive der Sauerstoffatome (graue Kreise) ist in die Figur eingezeichnet. Die Pfeile 1-6 markieren Bereiche, in denen ein erhöhter Kontrast erscheint. Dieser Kontrast kann mit Wasserstoffbrückenbindungen zu den nächsten Nachbarn assoziiert werden.
Abbildungsparameter:
a) 1,3x0,7 nm², konstanter Abstand, V_{b}=-5 mV, gemessen mit D₂ als Sensor und Signalwandler S
b) 1,5x0,6 nm², konstanter Abstand, V_{b}=-3 mV, D₂ als Sensor und Signalwandler S
c) 1,5x1,5 nm², konstanter Abstand, V_{b}=-5 mV, gemessen mit H₂ als Sensor und Signalwandler S
d) 3,2x3,2 nm², konstanter Abstand, V_{b}=-10 mV, D₂ als Sensor und Signalwandler S. Alle Bilder sind dargestellt wie gemessen und erzeugt mit WSXM als Programm.

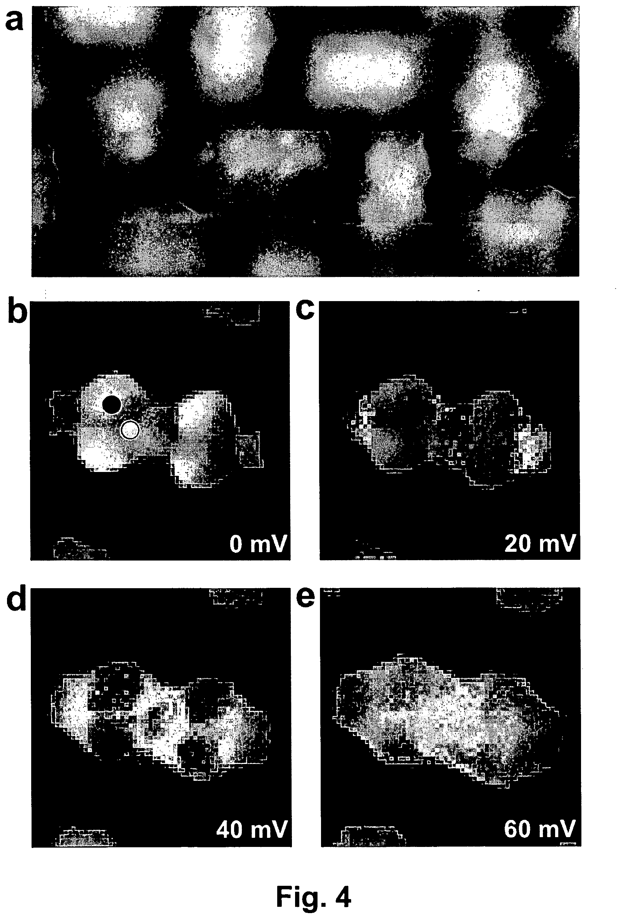

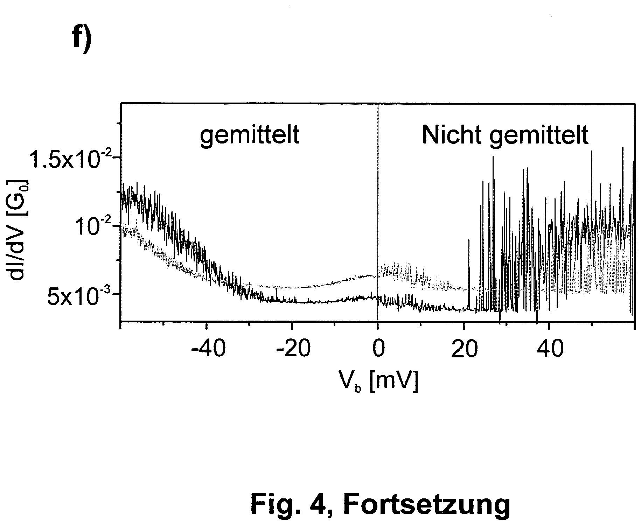

- Fig. 4:: Bedeckungs- und Bias-Spannungsabhängigkeit des atomar-geometrischen, chemischen (STHM-) Kontrastes.
a) Schalten zwischen der konventionellen Abbildung der LDOS und dem atomargeometrischen, chemischen (STHM-) Kontrastes bei niedrigen Bedeckungen von D₂ als Sensor und Signalwandler S
b) - e) 64x64 Pixel, 1,3x1,3 nm² dI/dV-STHM-Bilder bei konstantem Abstand, gewonnen aus den spektroskopischen Daten, gemessen über PTCDA/Au(111) mit D₂ als Sensor und Signalwandler S. An jedem Pixel des Bildes wurde ein dI/dV Spektrum aufgenommen, hierbei wurde lock-in-Technik (Modulationsamplitude 4 mV, Frequenz 4,8 kHz, Aufnahmezeit für ein Spektrum 1 s) benutzt. Das Minimum (schwarzer Kreis) und Maximum (weißer Kreis) der differentiellen Leitfähigkeit, in Einheiten des Leitfähigkeitsquantums G₀, ist in jedem Bild angegeben. Negative Leitfähigkeitswerte werden durch scharfe Leitfähigkeitsspikes verursacht. f) dI/dV-Spektren gemessen an den dargestellten Punkten in b). Auf der rechten Seite sind die Spektren dargestellt, wie sie gemessen wurden. Auf der linken Seite ist die Mittelung über die hell- bzw. dunkelgrauen Kreise (Durchmesser 3 Pixel ≈ 1 Å) in b) dargestellt. Scharfe Bereiche mit Rauschen jenseits von 20 mV sind die Leitfähigkeitsspikes, die mit der Anregung des D₂ Molekül hinaus aus dem Kontakt assoziiert werden.

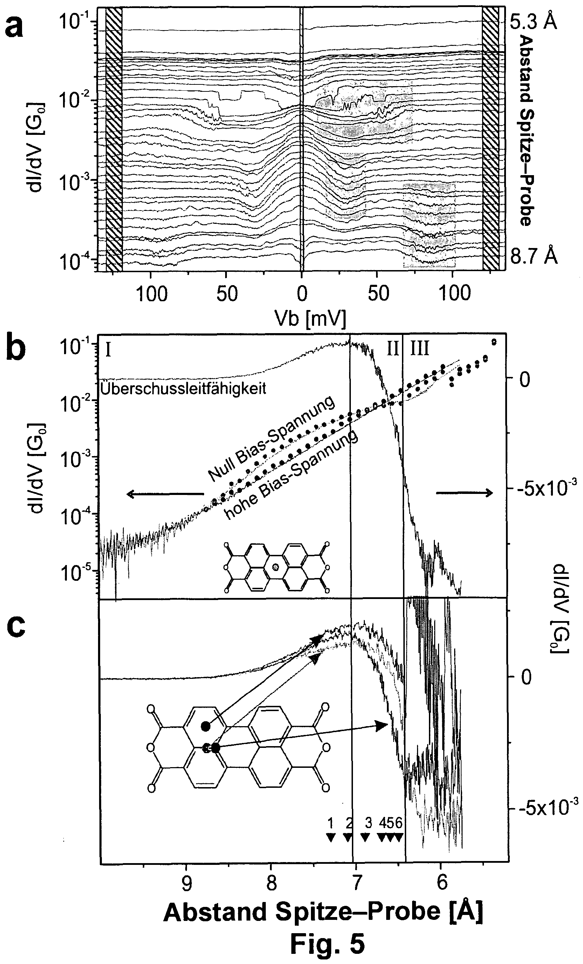

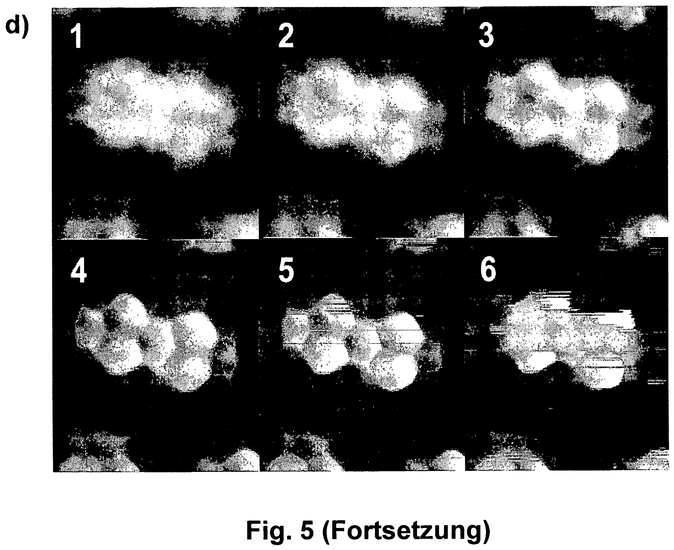

- Fig. 5:: Abstandsabhängigkeit der Leitfähigkeit des Kontaktes und des atomar-geometrischen, chemischen (STHM-) Kontrastes.
a) dI/dV-Spektren gemessen im Zentrum von PTCDA auf Au(111) mit D₂ gemessen, bei verschiedenen Abständen zwischen Spitze und Probe (Schrittweite 0,1 Å), aufgenommen mit lock-in-Detektion (10 mV Modulation, Frequenz 2,3 kHz). Die Bereiche mit grauen Rechtecken heben die Leitfähigkeitsspikes hervor.
b) Differentielle Leitfähigkeit gemessen im Zentrum von PTCDA auf Au(111) mit D₂ mit einer sich nähernden Spitze bei fester Bias-Spannung von -5mV (graue Linie) und 120-130 mV (schwarze Linie). Für die schwarze Linie wurden vier gemessene Spektren gemittelt: ^{dI}/_{dV}(-130 mV, z)+^{dI}/_{dV}(-120 mV, z)+^{dI}/_{dV}(120 mV, z)+^{dI}/_{dV}(130 mV, z))/4. Datenpunkte (schwarze und graue Punkte) wurden aus den Regionen extrahiert, die in a) schraffiert dargestellt sind. Die Überschussleitfähigkeit errechnet sich als Differenz der schwarzen und grauen Kurve.
c) Überschussleitfähigkeitskurven wie in b), jedoch wird die Spitze hier an verschiedenen Orten über dem Molekül angenähert. Die Positionen sind in der entsprechenden Farbe und durch Pfeile in der Skizze des Moleküls dargestellt.
d) Atomar-geometrische, chemische (STHM-) Bilder von PTCDA/Au(111) gemessen mit D₂ bei verschiedenen Abständen, die durch die Dreiecke in c) angezeigt werden. Abbildungsparameter: 1,3x1,3 nm², konstanter Abstand, V_{b}=-5 mV. I/V Leitfähigkeitsskalen (von schwarz nach weiß):
   1) 5x10⁻⁴<G/G₀<3x10⁻³,
   2) 3x10⁻⁵<G/G₀<3x10⁻³,
   3) 5x10⁻⁵<G/G₀<5x10⁻³,
   4) 6x10⁻⁵<G/G₀<6x10⁻³,
   5) 7x10⁻⁵<G/G₀<7x10⁻³,
   6) 2x10⁻⁴<G/G₀<2x10⁻².

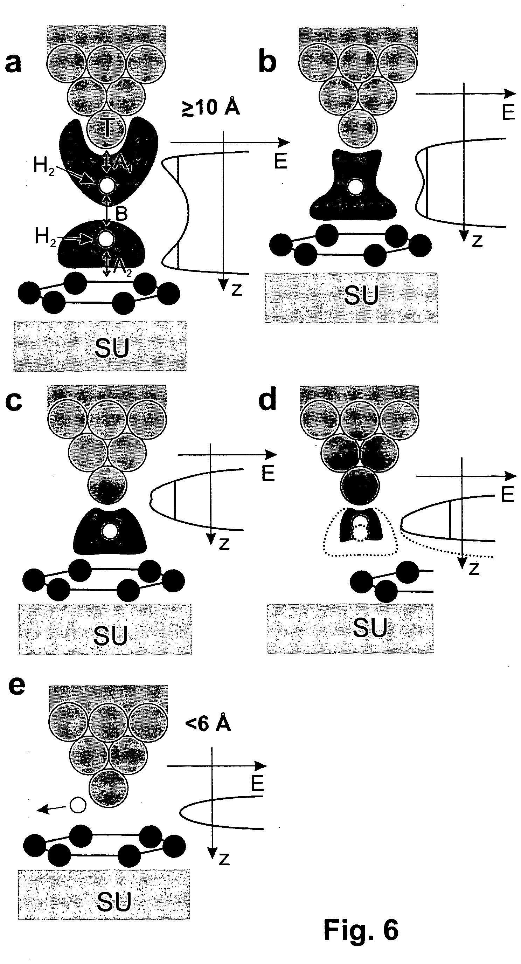

- Fig. 6:: Modellstruktur und Funktion des Probe-Spitze-Kontakts. Der Kontakt besteht aus einer scharfen Edelmetallspitze (siehe tip T in Fig. 6a, bestehend aus 6 Kreisen) und der Oberfläche des Substrats SU (grau), auf der ein aromatisches Ringmolekül (schwarz) adsorbiert ist. Zusätzlich sind H₂ oder D₂ Moleküle (weiße Kreise) innerhalb des Kontaktes gebildet, der bei einer Temperatur von 5-10K gehalten wird. In Fig. 6 b) bis d) wirken sie als Sensor und Signalwandler S. Die Physisorptionsmulden in denen H₂ oder D₂ gebunden sind, sind durch dunkelgraue Bereiche um die Gasmoleküle herum repräsentiert. Die z-Abhängigkeit des bindenden Potentials ist auf der rechten Seite jedes Kontaktes dargestellt, wobei Grundzustände in schwarz angedeutet sind.
a) Wenn der Abstand zwischen Spitze und Probe > 10 Å ist, können zwei Moleküle getrennt auf Spitze und Probe physisorbieren. Die Probe besitzt eine Reihe von Adsorptionsplätzen, einer dieser Adsorptionsplätze ist in der Mitte eines C₆ Rings. An der Spitze wird ein Molekül nahe an ihrem Apex adsorbieren. A1, A2 und B sind Gleichgewichtsbindungsabstände, welche sich zu ≈10 Å addieren. In einer solchen Konfiguration ist der Tunnelstrom zu klein, um in unserem System gemessen zu werden.
b) Bei Abständen zwischen 10 Å und 7 Å verbinden sich die Adsorbtionspotentiale von Spitze und Probe zu einer Mulde, die ein einzelnes Gasmolekül bindet. Der Kontakt ist im Regime, in dem die Leitfähigkeit vergrößert ist (Regime I in Abbildung 5b).
c) Bei Abständen zwischen 7 Å und 6,5 Å wird das bindende Volumen kleiner. Durch die verstärkte Pauliabstoßung werden die Elektroden (hauptsächlich die Spitze) polarisiert und ihre Zustandsdichte (DOS) verringert sich lokal, dies ist durch den dunkelgrauen Schatten in der Spitze angedeutet.
d) Verglichen mit c) hat sich die Spitze zu einem Punkt über dem PTCDA bewegt, an dem eine höhere Elektronendichte, aufgrund der C-C Bindung, herrscht. Die vergrößerte Pauliabstoßung ist in dem Potentialdiagramm dargestellt. Dies führt zu einer stärkeren Einsperrung und einer größeren Polarisierung der Spitze. Dadurch wird der atomar-geometrische, chemische (STHM-) Kontrast gebildet.
e) Bei Abständen zwischen Spitze und Probe < 6,5 Å, wird der Sensor instabil, weil das H₂ oder D₂ Molekül aus dem Kontakt entkommt.

Der Sensor und Signalwandler S wird in situ an der Spitze eines Tieftemperatur STM ausgebildet. Hierzu kann das in der WO2009/062631 A2 und in "A novel method achieving ultra-geometrical resolution in scanning tunnelling microscopy", New Journal of Physics, Band 10 (2008), 053012, XP20137768, von R. Temirov et al. angegebene Verfahren verwendet werden.

### Herstellung des Sensors und Signalwandlers S am Spitze-Probe-Kontakt des STM

Folgendes Verfahren liefert die erfindungsgemäße Vorrichtung des Rastertunnelmikroskops, dessen Betrieb eine chemische, atomar-geometrische Auflösung von Proben ermöglicht. Die erfindungsgemäße Vorrichtung wird, wie bereits vorab und im Weiteren auch als STHM (Scanning tunnelling hydrogen microscopy) bezeichnet.

In einem Tieftemperatur-Rastertunnelmikroskop mit einer Basistemperatur unterhalb der Kondensationstemperatur des verwendeten Gases, wird die Tunnelspitze durch die Grobannäherung des Mikroskops in den Tunnelkontakt mit der Oberfläche der Probe gebracht und gegebenenfalls für den folgenden Schritt mittels der z-Piezokeramik zurückgezogen.

Durch eine geeignete Vorrichtung, vorzugsweise einer kapillarhaften Zuleitung, wird das Gas unmittelbar in den Tunnelkontakt eingebracht, so dass es an den kalten Oberflächen der Probe bzw. der Spitze zu kondensieren beginnt, bis es schließlich nach der Zeit t₁ nach Beginn der Gaszufuhr die Eigenschaften des Tunnelkontaktes so verändert, dass STHM Bilder mit dem chemischen, atomar-geometrischen Kontrast aufgenommen werden können. Nach der Zeit t₁+Δ (mit 0≤Δ<<t₁) wird die Zufuhr von Gas in den Tunnelkontakt beendet.

Um diesen Zeitpunkt t₁ zu bestimmen, wird folgendes Verfahren angewendet:
1) Die Spitze wird durch die z-Piezokeramik bei eingestellter Tunnelspannung U in den Tunnelkontakt mit der Oberfläche gebracht, bis der Tunnelstrom den eingestellten Sollwert I erreicht. Das Wertepaar (U, I) definiert einen bestimmten Abstand d der Spitze von der Probe (Tunnelabstand). Dieser hängt von der Beschaffenheit der Probe, der Spitze und der lateralen Position Spitze über der Probe ab.
2) Die Rückkoppelschleife (Feed-Back-Loop) wird geöffnet.
3) Es werden in geeignetem zeitlichen Abstand von wenigen Sekunden bis Minuten bei konstantem Spitzenabstand IU-Kennlinien oder dI/dU-Spektren im Bereich ca. U=-100 mV bis 100 mV aufgezeichnet. Während dieser Zeit kann weiterhin Gas an den kalten Oberflächen des Rastertunnelmikroskops kondensieren.

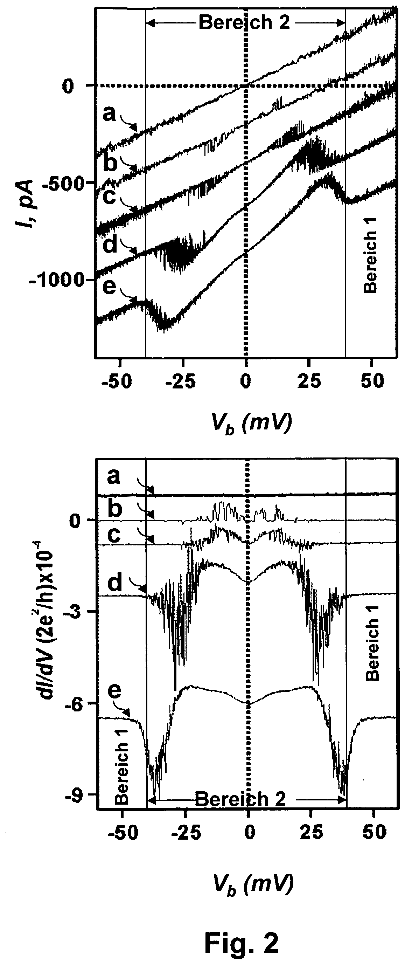

Nach der Zeit t₁ verändern sich die IU-Kennlinie und das dI/dU-Spektrum. Dies signalisiert eine Veränderung des Tunnelkontaktes. Typische Kennlinien und Spektren vor und nach der Veränderung sind in Abb. 2 oben gezeigt.

Zuverlässige Indikatoren des Zustands des Tunnelkontaktes, der atomar-geometrischen, chemischen Kontrast erlaubt, sind die scharfen, nach unten weisenden Peaks negativen differentiellen Leitwerts, die in den dI/dU-Spektren symmetrisch verteilt um die Tunnelspannung 0 mV erscheinen. Die Tunnelspannungen U_{NDC}, bei denen sie vorkommen, variieren zwischen ca. 10 und 50 mV, in selteneren Fällen bis zu 100 mV und darüber. Für bestimmte Tunnelabstände d können die Peaks auch nach oben weisen.

Nach der Veränderung der IU-Kennlinien und dI/dU-Spektren können STHM Bilder aufgenommen werden. Zu diesem Zweck wird die Spitze bei kleiner Tunnelspannung U lateral über die Probe gerastert. Zwei Betriebsmodi des STM können verwendet werden: der Konstantstrom-Modus (constant current mode) und der Konstantabstand-Modus (constant height mode).

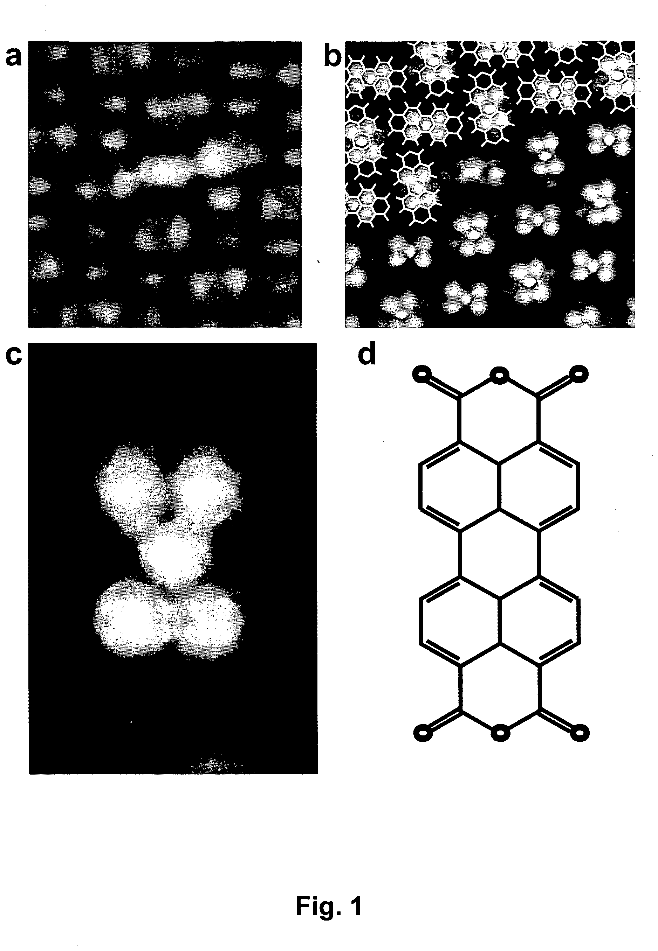

Die STHM Bilder mit atomar-geometrischen, chemischen Kontrast zeigen einen gegenüber dem konventionellen STM verbesserten Kontrast (vergleiche Fig. 1). Zur Optimierung der Bilder können nun, wie auch bei STM üblich, Tunnelspannung U und Stromsollwert I im Konstantstrom-Modus oder Tunnelspannung U und Tunnelabstand d im Konstantabstand-Modus variiert werden, um für die jeweilige Probe, Spitze und das jeweilige Mikroskop ein optimales Abbildungsergebnis zu erhalten. Ein weiterer Parameter, mit dem Bilder optimiert werden können, ist die Geometrie der Tunnelspitze. Die Optimierung der STHM Bilder kann auch die IU-Kennlinien und dI/dU-Spektren weiter verändern.

Ebenfalls können mit dem atomar-geometrischen, chemischen Kontrast Bilder durch Verwendung des Verfahrens der sogenannten spektroskopischen Abbildung von Ableitungen des Tunnelstroms I nach der Tunnelspannung U aufgenommen werden.

Wenn der chemische, atomar-geometrische Kontrast des STHM und die charakteristischen IU-Kennlinen und dI/dU-Spektren des STHM verloren gehen, kann durch einfaches Weiterrastern auf der Probenoberfläche der chemische, atomar-geometrischen STHM Kontrast zusammen mit den charakteristischen IU-Kennlinen und dI/dU-Spektren des STHM innerhalb eines Zeitraums von Sekunden bis Minuten wiederhergestellt werden. Wenn beide nicht spontan zurückkehren, kann erneut Gas in den Tunnelkontakt dosiert werden wie oben beschrieben.

Wenn der chemische, atomar-geometrische STHM Kontrast verloren geht, die charakteristischen IU-Kennlinen und dI/dU-Spektren des STHM jedoch verbleiben, kann der chemische, atomar-geometrische STHM Kontrast durch Optimierung der Tunnelspitzengeometrie zurück gewonnen werden.

Durch Veränderung der Tunnelspannung U kann zwischen dem elektronischen STM Kontrast und dem chemischen, atomar-geometrischen STHM Kontrast beliebig oft hin und her geschaltet werden. Für Tunnelspannungen U mit -|U_{NDC}| < U < |U_{NDC}| (Bereich 2 in Fig. 2) werden nichtkonventionelle Bilder beobachtet, wobei der klarste chemische, atomar-geometrische STHM Kontrast bei Tunnelspannungen U≈0 mit |U|<<|U_{NDC}| beobachtet wird.
Im Bereich -|U_{NDC}| < U < |U_{NDC}| mit U≠0 und |U|≤≈|U_{NDC}| können die Bilder reichhaltige zusätzliche Information über die Probenoberfläche enthalten.
Für Tunnelspannungen U< -|U_{NDC}| oder U> |U_{NDC}| (Bereich 1, Fig. 2) beobachtet man herkömmliche Bilder des elektronischen STM Kontrasts.

Ein Schalten der Tunnelspannung U zwischen den Bereichen 1 und 2 erlaubt den direkten Vergleich von chemischer, atomar-geometrischer und elektronischer Struktur derselben Probenoberfläche. Bilder der elektronischen und der chemischen, atomar-geometrischen Struktur können auch durch Schalten der Tunnelspannung U zwischen den Bereichen 1 und 2 an jedem Bildpunkt auch parallel aufgenommen werden.

Die optimale Dosismenge des verwendeten Gases, das heißt die bereitzustellende Stoffmenge, die zu dem bestmöglichen chemischen, atomar-geometrischen STHM Kontrast führt, hängt vom verwendeten Mikroskop, der verwendeten Dosiervorrichtung und der beide umgebenden Umgebung, z. B. eventuell vorhandene Kühlschilde, (Vakuum-)Kammer, etc. ab. Sie müssen einmalig ermittelt werden und liefern dann in weiteren Experimenten für den jeweiligen Aufbau zuverlässige Resultate.

Die für atomar-geometrischen, chemischen Kontrast optimalen Werte der Tunnelspannung U und des Tunnelstroms I (Konstantstrommodus) bzw. der Tunnelspannung U und des Tunnelabstands d hängen von Mikroskop, der Tunnelspitze und der Probe ab. Alle Werte von U und I, die herkömmliche elektronische STM Bilder erlauben, können als Anfangswerte für STHM verwendet werden. Wenn für eine bestimmte Kombination aus Mikroskop, Tunnelspitze und Probe optimierte Werte bekannt sind, kann das Rastern im erfindungsgemäßen STHM Modus direkt mit diesen Werten begonnen werden.

Die Ergebnisse der Fig. 1 und der Fig. 2 wurden wie folgt gewonnen. Es wurde ein Ultrahochvakuum-Tieftemperatur-Rastertunnelmikroskop mit ⁴He-Badkryostaten und zwei geschlossenenen Kühlschilden verwendet. Das äußere Kühlschild wurde bei 77 K, das innere bei 4,2 K in einer Ultrahochvakuumkammer, Fabrikat Createc, gehalten.

Die Dosiervorrichtung umfasst einen Gaseinlass mit handbetriebenem Dosierventil an der Ultrahochvakuumkammer, in der sich die Kühlschilde und das Mikroskop befinden. Die Spitze wird mittels der z-Piezokeramik zurückgezogen, so dass das Gasventil betätigt werden kann, ohne dass es bei der Betätigung durch mechanische Erschütterung zum Tip-Crash kommt. Wenn gewährleistet ist, dass die Betätigung des Ventils zu keiner mechanischen Störung führt, kann die Spitze während des folgenden Schritts auch im Tunnelkontakt belassen werden.

Während des Dosiervorgangs sind die Pumpen an der Ultrahochvakuumkammer ausgeschaltet. Das Dosierventil wird so weit geöffnet, dass der in der Ultrahochvakuumkammer gemessene Druck auf den Wert p ansteigt. Während des Dosiervorgangs sind Klappen mit ca. 5mm Durchmesser in beiden Kühlschilden geöffnet, so dass das Gas ungehindert zum Mikroskop strömen kann. Sofort nach der Zeit t₁ wird das Dosierventil geschlossen.

Nach dem Schließen des Dosierventils wird die Tunnelspitze mittels der z-Piezokeramik in Tunnelkontakt mit der Probe gefahren.

Für Fig. 1 gilt insbesondere: p=3×10⁻⁸ mbar, t₁=1 min. Als Gas wurde Deuterium (D₂) verwendet. Probe ist PTCDA/Ag(111).
(a) 5x5 nm² Konstantstrombild mit herkömmlichem elektronischem STM Kontrast, aufgenommen mit I=1 nA, U=-0,340 V.
(b) 5×5 nm² Konstantabstand-dI/dV-Bild der Probenfläche aus (a), aufgenommen mit dem chemischen, atomar-geometrischen STHM Kontrastmodus. Das Bild wurde mit Deuterium (D₂) aufgenommen. Vor Aufnahme des Bildes wurde die Tunnelspitze mit einer Tunnelspannung von U=-0,010V und einem Tunnelstrom I=1 nA in Tunnelkontakt mit der Probenoberfläche gebracht. Tunnelspannung bei Aufnahme des Bildes U=0 mV. Das Bild wurde mit einem Lock-in-Amplifier aufgenommen (Modulationsamplitude 4 mV, Modulationsfrequenz 626 Hz). In der oberen linken Ecke ist die gerechnete atomare Struktur von PTCDA/Ag(111) eingeblendet.
(c) Vergrößerter Ausschnitt aus (b), 1×1,5 nm².
(d) Strukturformel der abgebildeten PTCDA Moleküle.

Für Fig. 2 gilt insbesondere:
p=6,4×10⁻⁹ mbar, t₁=6,5 h. Als Gas wurde Wasserstoff (H₂) verwendet. Probe ist PTCDA/Ag(111). PTCDA ist 3, 4, 9, 10-Perylentetracarbonsäure-Dianhydrid.

Die Kennlinien im oberen Bildabschnitt der Figur 2 sind vertikal auf der Y-Achse nach unten um folgende Werte verschoben: Kennlinie a = 0 pA, Kennlinie b = 200 pA, Kennlinie c = 400 pA, Kennlinie d = 600 pA, Kennlinie e = 800pA. Im unteren Bildabschnitt der Figur 1 sind die ebenfalls versetzten dI/dU-Spektren gezeigt. Die Spektren b-e sind vertikal auf der Y-Achse nach unten verschoben. Unverschoben zeigen alle Spektren b-e bei Biasspannungen kleiner -50 mV und größer + 50 mV den Wert des unverschobenen Spektrums a.

Die obere Kennlinie a und das obere Spektrum a sind vor Einlass des Wasserstoffs aufgenommen worden. Die Kennlinie b und das Spektrum b wurde bei der Zeit t₁ aufgenommen (s.o.). Die Kennlinie c und das Spektrum c wurde bei t₁+22 min aufgenommen. Die Kennlinie d und das Spektrum d wurde aufgenommen bei t₁+80 min. Die Kennlinie e und das Spektrum e wurde aufgenommen bei t₁+14 h. Alle Kurven wurden zentral über einem PTCDA Molekül aufgenommen. Vor dem Messen der Spektren wurde die Tunnelspitze bei U=-0,340 V, I=0,1 nA stabilisiert.

### 2. Nachweis des Kraftsensors und Signalwandlers S

Wie sich aus den folgenden Daten ergibt, ist die Wirkung des Sensor und Signalwandler S auch die eines Kontrastmittels.

Das erfindungsgemäße Verfahren wird z. B. durch Kondensation von molekularem Wasserstoff (H₂) oder Deuterium (D₂) in dem kalten (z. B. <10K) Tunnelübergang eines Ultrahochvakuum-STMs eingeleitet. Die Adsorption des Gases verändert den Kontrast während des Abrasterns abrupt (siehe Fig. 4a). Bei kleinen Bedeckungen sind diese vorteilhaften Änderungen instabil und der normale STM Kontrast wird spontan nach kurzer Zeit wiederhergestellt. Wenn die Gasmenge auf der Oberfläche weiter erhöht wird, kann der geänderte Kontrast für beliebig lange Zeit eingestellt werden.

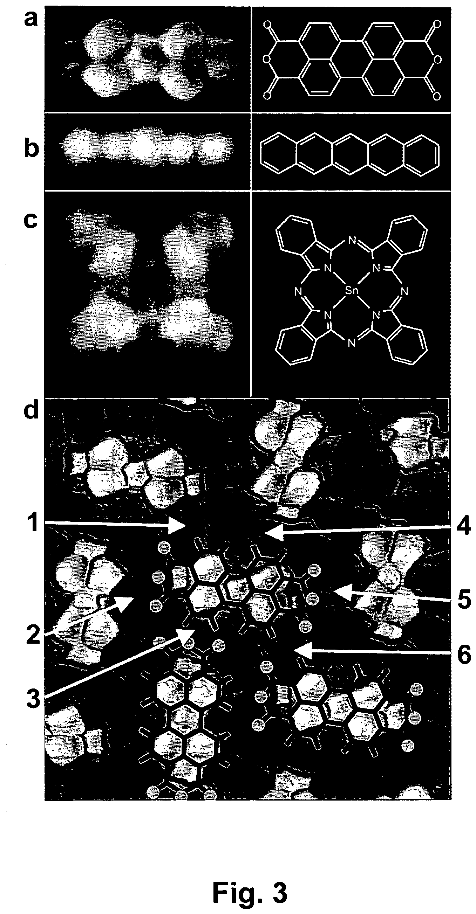

Im neuen STHM-Modus (STHM=scanning tunnelling hydrogen microscopy), wurden komplexe organische Moleküle, die auf Edelmetalloberflächen, insbesondere Gold und Silber (Fig. 3 a-d) adsorbiert waren, untersucht. Der erreichte Kontrast entspricht der chemischen, atomar-geometrischen Struktur. In Fig. 3d) werden zudem die intermolekularen Bindungen mittels STHM-Mikroskopie abgebildet. Die Messungen in diesem Modus sind nicht empfindlich auf die lokale Zustandsdichte (LDOS), die normalerweise mit dem STM abgebildet wird. Fig. 3 zeigt die universelle Einsetzbarkeit des erfindungsgemäßen Verfahrens.

Die spektroskopische Charakterisierung des Kontaktes in der Anwesenheit des adsorbierten Gases, sowohl als Funktion der Biasspannung (Spektren differentieller Leitfähigkeit) als auch des Spitze-Probe-Abstands, sind der Schlüssel für das Verständnis des atomar-geometrischen, chemischen Abbildungsmechanismus. Um zu bestimmen, ob bestimmte Merkmale in den Spektren der differentiellen Leitfähigkeit (dI/dU) im Zusammenhang mit dem STHM-Abbildungsmodus stehen, wurden die dI/dU-Spektren mit einer statischen, das heißt nicht lateral rasternden Spitze, auf einem Gitter mit 64x64 Punkten über einem einzelnen PTCDA-Molekül aufgenommen. Zwei typische Spektren sind in Abbildung 4f) zu sehen. Diese zeigen starke Abweichungen vom linearen I(U) Verhalten, die ein charakteristisches Merkmal von nanoskaligen Kontakten in der Anwesenheit von H₂ oder D₂ sind; ihr spezifisches Aussehen ist ein Fingerabdruck des Zustandes, in dem sich der Kontakt befindet. Der dI/dV (X, Y, V) Datenwürfel, der in dieser Weise aufgenommen wurde, ermöglicht es, dI/dU-Bilder bei jeder beliebigen Biasspannung zu erzeugen (siehe Fig. 4b) - e)). Zwei Dinge können aus Fig. 4 entnommen werden: Erstens, dass der durch H₂ (D₂) erzeugte atomar-geometrische, chemische Kontrast eine laterale Karte der differentiellen Leitfähigkeit des Tunnelkontaktes bei Biasspannung Null ist (Fig. 4a)). Zweitens zeigen die Figuren 4b) - d), dass der atomar-geometrische, chemische Kontrast verschwindet, wenn ein kritischer Wert der Tunnelspannung (ungefähr 40mV im vorliegenden Fall) überschritten wird; dieser Wert deckt sich mit der Position der scharfen, nach unten (oder oben) weisenden Peaks, die in den dI/dU-Spektren symmetrisch verteilt um die Tunnelspannung 0 mV erscheinen. Diese scharfen Minima oder Maxima in der differentiellen Leitfähigkeit werden im folgenden kurz dI/dU-Spikes genannt.

Die Daten in Fig. 4 vermitteln außerdem wichtige Informationen über den Kontakt selbst. Die Tatsache, dass das statische Bild in Fig. 4a) mit dem gerasterten Bild oben in Fig. 3a) übereinstimmt, beweist, dass der entsprechende Abbildungsmechanismus auf einem Kontakt im strukturellen Geleichgewicht basiert. Insbesondere ist der atomar-geometrische, chemische Kontrast unabhängig von der Richtung und Geschwindigkeit des Rasterns. Dies zeigt, dass alle beteiligten Prozesse auf der Zeitskala des Experimentes schnell sind. Darüber hinaus zeigt Fig. 4f), dass der Gleichgewichtszustand des Kontaktes, wie durch das spezielle Erscheinungsbild des Leitfähigkeitsspektrums repräsentiert, sich von Punkt zu Punkt auf der Probe ändert.

Aus den Daten ergibt sich folgendes Bild. Die Gasadsorption ändert die Eigenschaften des Spitze-Probe-Kontaktes so, dass seine Leitfähigkeit auf die lokale, atomar-geometrische, chemische Struktur (im Gegensatz zur LDOS) der Probe reagiert. Dies geschieht durch Bildung des Sensors und Signalwandlers S im Spitze-Probe-Kontakt. Wenn die Spitze über die Probe gerastert wird, antwortet der gasmodifizierte Kontakt mit dem in ihm enthaltenen Sensor S auf laterale Veränderungen der Probenstruktur durch Änderung seines Gleichgewichtszustandes. Auf diese Weise "erfühlt" der Kontakt mit dem in ihm enthaltenen Sensor S die Oberflächenstruktur. Der geänderte Gleichgewichtszustand ändert die Leitfähigkeit (bei Biasspannung Null). Dabei werden Informationen über die Beschaffenheit der Probe in ein Leitfähigkeitssignal umgewandelt, das einfach mit dem STM gemessen werden kann. Damit fungiert der Sensor im gasmodifizierten Kontakt auch als Signalwandler.

Um die Eigenschaften des Sensors und Signalwandlers S weiter zu untersuchen, wird der Spitze-Probe-Kontakt mit darin enthaltenem Sensor und Signalwandler S durch eine Serie von dI/dU Spektren charakterisiert, die mit verschiedenen Abständen zwischen Spitze und Probe aufgenommen wurden (Fig. 5a)). Aus diesem Satz von Spektren können Annäherungskurven bei konstanter Biasspannung erzeugt werden (Punkte in Fig. 5b)). Auf ähnliche Weise wurden Leitfähigkeitskurven bei fester Biasspannung aufgenommen, während die Spitze an die Probe angenähert wurde (Linien in Fig. 5b)). Diese Annäherungskurven stimmen mit denen, die aus Fig. 5a) extrahiert wurden, überein. Sie enthalten allerdings mehr Datenpunkte.

Die Spektren in Fig. 5a) zeigen ausgeprägte Abweichungen vom linearen I(U)-Verhalten, die bereits aus Fig. 4f) bekannt sind. Figur 5b) offenbart, dass diese Nichtlinearitäten mit deutlichen Abweichungen vom exponentiellen Verhalten verbunden sind, das charakteristisch für einen Tunnelkontakt ist. Im Gegensatz hierzu sind die Spektren bei Spannungen jenseits der dI/dU-Spikes (die Position der Spikes ändert sich in Fig. 4a von ±40mV und ±100mV abhängig vom Abstand zwischen Spitze und Probe) flach, und gleichzeitig erscheint in den korrespondierenden Abstandskurven wieder die für den Tunneltransport charakteristische einfache exponentielle Abhängigkeit. Wichtig ist, dass dieses Wiederauftreten der exponentiellen Abhängigkeit gleichzeitig mit dem Verlust des atomar-geometrischen, chemischen Kontrastes (Fig. 4d)-e)) passiert. Die dI/dU-Spikes offenbaren sich deshalb als kritische Punkte, an denen sich die Eigenschaften des Kontaktes entscheidend ändern. In diesem Zusammenhang ist zu bemerken, dass im Zusammenhang mit wasserstoffhaltigen Nanokontakten gefunden wurde, dass die dI/dU-Spikes immer dann auftreten, wenn Wasserstoffmoleküle durch den Strom von wohldefinierten gebundenen Zuständen innerhalb des Spitze-Probe-Kontaktes in ein dichtes Spektrum von schwach gebundenen Zuständen außerhalb des Spitze-Probe-Kontakts angeregt werden.

Dies verdeutlicht, warum der atomar-geometrische, chemische Kontrast verschwinden muss. An den dI/dU-Spikes wird der Wasserstoff, oder alternativ Deuterium oder ein anderes geeignetes Molekül aus dem Kontakt hinaus angeregt, und ein leerer Kontakt zeigt selbstverständlich wieder einfache Tunnelcharakteristiken und konventionelle LDOS Bilder.

Das nicht exponentielle Verhalten in Fig. 5b ist der Schlüssel zu der atomar-geometrischen, chemischen Abbildung. Unter Benutzung der Annäherungskurven in Fig. 5b) kann der Effekt der Adsorption von H₂ bzw. D₂ quantitativ dargestellt werden, indem die Kurve bei niedriger Biasspannung (0mV) von der bei hoher Biasspannung (Mittelung von 120 bis 130mV) subtrahiert wird. Die resultierende Überschussleitfähigkeitskurve liefert eine Möglichkeit zur Messung der Amplitude des anomalen Verhaltens bei der Biasspannung Null, das mit dem STHM Abbildungsmodus zusammenhängt. Fig. 5c) zeigt die Überschussleitfähigkeiten für verschiedene Punkte auf einem auf der Probe adsorbierten PTCDA Molekül. Während jeder Punkt eine bestimmte und reproduzierbare Überschussleitfähigkeitskurve liefert, sind zwei immer entgegengesetzte Tendenzen präsent. Die erste erhöht die Überschussleitfähigkeit mit abnehmendem Spitz-Probe Abstand, während die zweite das Gegenteil bewirkt (das heißt steigende Überschussleitfähigkeit mit abnehmendem Abstand). Gemäß Fig. 5b) dominiert die erstgenannte Tendenz bei großen Abständen (>7 Å), die letztere bei kleineren (7-6,4 Å). Das gegenläufige Verhalten der zwei Tendenzen führt zu einem Maximum der Überschussleitfähigkeit bei 7 Ä und erlaubt die Definition drei verschiedener Bereiche (siehe Fig. 5b): Bereiche I-III).

Es zeigt sich, dass die Überschussleitfähigkeitskurve das System Spitze-Probe-Kontakt mit darin enthaltenem Sensor und Signalwandler S, das den chemischen, atomar-geometrischen Kontrast liefert, vollständig charakterisieren. Weiterhin beinhalten sie den Schlüssel für das Verständnis der Funktionsweise des Sensors und Signalwandlers S.

Wasserstoff und Deuterium als Sensor und Signalwandler S physisorbieren in der Mono- und Multilage. Auf flachen Oberflächen liegt die Multilagendesoptionstemperatur von D₂ bei 8K, während nicht mehr als zwei Lagen von H₂ bei einer Temperatur von 4,2K adsorbieren können. Dies bedeutet, dass die H₂ oder D₂ Bedeckung von Spitze und Probe sich in den dargestellten Experimenten auf wenige Lagen selbstbeschränkt. Das Verschwinden der wasserstoffinduzierten Merkmale in den Spektren bei 20 ± 5 K, wird möglicherweise hervorgerufen durch Kapillarität im Kontakt zwischen Spitze und Probe.

Bei Spitze-Probe-Abständen von <10 Å (abgeschätzt aus den Experimenten) bietet der Spitze-Probe-Kontakt daher nur einer Lage von Gasmolekülen Platz, weil der typische Adsorptionsabstand von Wasserstoff 3,2 Å und der intermolekulare Abstand im Wasserstofffestkörper 3,3 Å ist. Die hohe laterale Auflösung der Bilder, die in Fig. 3 gezeigt ist, legt darüber hinaus nahe, dass die Abbildung von einem einzelnen H₂ (D₂) Molekül erzeugt wird, welches sich relativ stabil am vordersten Spitzenatom befindet. Diese Vermutung wird bestätigt durch die (i) erhöhte Bindungsaktivität von Gold Adatomen gegenüber D₂ (ii) die dI/dU-Spikes, welche nur erwartet werden, wenn das H₂ oder D₂ Molekül eine stabile und eindeutige Adsorptionsstruktur innerhalb des Kontaktes hat und (iii) die Reproduzierbarkeit und Stabilität des atomar-geometrischen, chemischen Abbildungsmechanismus selbst.

Der atomar-geometrische, chemische Abbildungsmodus tritt schon bei relativ kleinen Gasbedeckungen auf, sobald ein Molekül innerhalb des Kontaktes eingeschlossen wird. Dies ist in der Tat zu beobachten (siehe Fig. 4a), wobei Fig. 4a auch zeigt, dass das Molekül spontan während des Abrasterns der Probe aus dem Kontakt verschwinden kann.

Die Experimente zeigen, dass bei höheren Bedeckungen der atomar-geometrische, chemische Abbildungsmodus stabiler wird, entweder durch eine höhere Häufigkeit mit der H₂ oder D₂ Moleküle im Kontakt eingeschlossen werden, und/oder durch ein zusätzliches einschränkendes Potential, das durch im oder neben dem Kontakt benachbarte H₂ (D₂) Moleküle auf das zentrale H₂- bzw. D₂-Molekül ausgeübt wird. In der Tat kann ein solcher Einfluss von benachbarten H₂- bzw. D₂-Molekülen an den Veränderungen der dI/dU-Spikes als Funktion der Zeit, die die Probe dem Gas ausgesetzt ist, selbst wenn der atomar-geometrische Kontrast schon hergestellt ist, abgelesen werden (Fig. 2).

Das Regime des atomar-geometrischen, chemischen Kontrasts ist klar zu unterscheiden von der Abbildung dicht gepackter Monolagen von kondensiertem H₂ und D₂ selbst, da vorliegend unter den diskutierten Bildern, niemals Bilder von H₂- oder D₂- Lagen beobachtet wurden. Daraus kann geschlossen werden, dass alle vorgestellten Experimente bei Submonolagen-Bedeckungen mobiler H₂ (D₂)-Moleküle durchgeführt wurden.

Folgendes Bild des Spitze-Probe-Kontaktes nach dem Gasangebot ergibt sich aus der obigen Diskussion der Adsorptionseigenschaften von H₂ und D₂ bzw. anderen Sensormaterialien. Sowohl die Spitze als auch die Probe binden in ihrem jeweiligen Physisorptionsminimum Gasmoleküle (siehe Fig. 6). Da die Adsorption an der Spitze (tip), die durch 6 Kreise dargestellt ist, in der Nähe des vordersten Spitzenatoms erfolgt, kann das Adsorptionspotential der Spitze als nahezu rotationssymmetrische Mulde betrachtet werden. Die Probe bietet ebenfalls eine große Anzahl von Adsorptionsplätzen. Im Fall der aromatischen Moleküle in Fig. 3 liegt eine Gruppe von solchen Plätzen z.B. in den Zentren der jeweiligen C₆ Ringe. Das Potential an diesen Plätzen kann ebenfalls als nahezu rotationssymmetrische Mulde betrachtet werden, die ebenfalls ein einzelnes Gasmolekül aufnehmen kann. Während des Abrastern der Probe in entsprechendem Abstand zwischen Probe und Spitze verschmelzen die Potentialmulden an Spitze und Probe (siehe Fig. 6b). Das resultierende Potential kann nur ein einzelnes Molekül zwischen Spitze und Probe beherbergen.

Damit wird klar, dass ein einzelnes H₂ oder D₂ Molekül in der kombinierten Potentialmulde der Sensor und Signalwandler S ist, der für den atomar-geometrischen, chemischen Abbildungsmodus verantwortlich ist. Um die Funktionsweise dieses Sensors und Signalwandlers S zu verstehen, wird die Überschussleitfähigkeit aus Fig. 5b) und die Herkunft der zuvor erwähnten drei Regime diskutiert. Die plötzliche und nicht reproduzierbare Änderung der Überschussleitfähigkeit in Regime III hat ihren Ursprung darin, dass das Molekül mechanisch aus dem Kontakt verdrängt wird. Möglicherweise geht dies mit einer strukturellen Änderung der Elektroden (das heißt Spitze und Probe) einher (Fig. 6e)). Direkt vor dem erzwungenen Verlassen des Spitze-Probe Kontakts (siehe Fig. 6c)) wird das Gasmolekül zwischen den Elektroden zunehmend eingeschränkt. Dies geschieht in Regime II. H₂ und D₂ in kondensierter Form weisen aufgrund ihrer hohen Nullpunktsenergie (ZPM) eine große Kompressibilität auf. Eine ähnlich hohe "Kompressibilität" ist für das einzelne Molekül des Sensors und Signalwandlers S im Spitze-Probe-Kontakt zu erwarten. Wenn in Regime III das H₂ oder D₂ Molekül aus dem Kontakt entkommt, ist seine Nullpunktsenergie groß genug, um die laterale Begrenzung der Potentialmulde zu überwinden. Während der Kompression in Regime II wird die Nullpunktsenergie ZPM des eingeschlossenen Moleküls aufgrund des Pauliabstoßung des eingeschlossenen Moleküls von Spitze und Probe, stetig vergrößert. Die Pauliabstoßung zwischen einem Molekül oder Atom mit geschlossener Elektronenschale und einer Metalloberfläche verringert die Zustandsdichte lokal in einem kleinen Energiebereich um die Fermienergie herum (siehe Fig. 6c/d). Der Effekt ist umso größer, je stärker die Pauliabstoßung ist. Er führt aufgrund der reduzierten Zustandsdichte in der Spitze und gegebenenfalls der Probe zu einer Verringerung der Leitfähigkeit des Spitze-Probe-Kontaktes (Fig. 6c/d)).

Die Zunahme der Überschussleitfähigkeit in Regime I von Fig. 5 b) kann ebenfalls durch eine Veränderung der Potentialmulde, in dem der Sensor und Signalwandler S gebunden ist, erklärt werden. Regime I beginnt bei großen Entfernungen zwischen Probe und Spitze, wenn beide jeweils ein H₂ oder D₂ Molekül binden können (siehe Fig. 6a)). Im Anfangsstadium der Verschmelzung beider Potentialmulden bildet sich entlang der z-Richtung ein charakteristisches Doppelmuldenpotential aus. In diesem Potential kann ein einzelnes H₂ oder D₂ Molekül von einem zum anderen lokalen Minimum springen. Es ist vorstellbar, dass diese Bewegung an den Elektronenstrom koppelt und dabei die Leitfähigkeit des Spitze-Probe-Kontakts vergrößert.

Anhand der Fig. 5d), die eine Sequenz von sechs Bildern zeigt, die bei abnehmenden Abstand zwischen Probe und Spitze aufgenommen wurden, kann der atomar-geometrische, chemische Kontrast eindeutig dem Regime steigender Pauliabstoßung (Regime II) zugeordnet werden. Die Figur zeigt deutlich, dass die höchste Auflösung im atomar-geometrische, chemischen Kontrast direkt vor dem Übergang von Regime II zu Regime III erreicht wird. Es wird gefolgert, dass die repulsive Wechselwirkung des Sensors und Signalwandlers S mit der Probe die Basis für den atomar-geometrischen, chemischen Kontrast ist.

Der Mechanismus der atomar-geometrischen, chemischen Kontrastbildung ist auch in Fig. 6c) - d) für ein auf der Probe adsorbiertes Molekül schematisch gezeigt. Wenn die Spitze in konstanter Höhe über der Probe von einem Punkt mit niedrigerer Elektronendichte zu einem Punkt mit höherer Elektronendichte geführt wird, nimmt die Pauliabstoßung durch das Adsorbat (hier vereinfacht durch einen einzigen Benzolring repräsentiert) zu. Folglich wird die der Probe zugewandte Wand der Potentialmulde, in der sich das H₂ Molekül befindet, steiler, wodurch das H₂ Molekül näher an die Spitze verschoben wird. Das H₂ Molekül reagiert also auf die abstoßende Kraft des Adsorbats als ein Sensor. Wenn das H₂ Molekül als Sensor nun näher an die Spitze heranrückt, steigt die Pauliabstoßung zwischen H₂ und der Spitze, mit der Konsequenz, dass das H₂ Molekül nun als Signalwandler wirkt und als solcher die elektronische Zustandsdichte in der Spitze durch Polarisation verringert. Dies führt zur Verringerung des Leitwerts im Spitze-Probe-Kontakt. Der atomar-geometrische, chemische Kontrastmodus reagiert daher auf die Gesamtelektronendichte und kann daher genutzt werden, um die chemische Struktur von Molekülen oder Bindungen zwischen Molekülen sichtbar zu machen.

In obigem Modell entsteht der atomar-geometrische, chemische Kontrast als eine Modulation des konventionellen LDOS Kontrastes. Wenn sich die Spitze lateral bei konstantem Abstand zu einem anderen Punkt über die Probe bewegt, wird sie dort eine andere LDOS vorfinden, und dies führt zu einer veränderten Leitfähigkeit des Tunnelkontakts. In Fig. 5b) würde dies zu einer Verschiebung der exponentiellen Kurve führen. Gleichzeitig wird sich aber das Potential, indem sich der Sensor und Signalwandler S befindet, ebenfalls ändern. Dies führt zu einer anderen Überschussleitfähigkeit am neuen Punkt über der Probe. Solange die Änderung in der Überschussleitfähigkeit größer ist als die durch die LDOS induzierte Änderung der Hintergrundleitfähigkeit selbst, wird das aufgenommene Tunnelbild vom atomar-geometrischen, chemischen Kontrast beherrscht. In den meisten Fällen, die hier untersucht wurden, ist die molekülinduzierte Zustandsdichte in der Umgebung der Fermienergie klein. Daher ist nur geringer LDOS Kontrast zu erwarten. Andererseits existiert bei PTCDA/Ag(111) eine beachtliche molekülinduzierte Zustandsdichte am Ferminiveau. In diesem Falle erwartet man eine Überlagerung der beiden Kontraste (LDOS und atomargeometrisch, chemisch), und dies wurde in der Tat beobachtet.

Es wurde gezeigt, dass die Adsorption von molekularen Gasen, wie H₂ und D₂, unter geeigneten Bedingungen (siehe Abschnitt 1 des speziellen Beschreibungsteils) in einem Tunnelkontakt zur Bildung eines nanoskaligen Sensors und Signalwandlers S führt, der ein einzelnes, zwischen Spitze und Probe gebundenes Molekül umfasst. Der Sensor und Signalwandler S reagiert auf die laterale Änderungen des repulsiven Teils des Adsorptionspotentials der Probe. Dieses Signal wird dann durch Polarisation der lokalen Zustandsdichte nahe der Fermienergie in das Leitfähigkeitssignal überführt.

Das erfindungsgemäße Verfahren begründet ein neues Paradigma für STM Experimente. Im konventionellen STM bei typischen (nicht zu kleinen) Arbeitsabständen ist die Spitze ein passives Element, das die Tunnelwahrscheinlichkeit zwischen seiner Position und der Probe misst. Da die Tunnelwahrscheinlichkeit proportional zur lokalen Zustandsdichte ist, können auf diese Weise Informationen über die Probe gewonnen werden. In dem neuen hier beschriebenen Verfahren ist der Tunnelstrom zwischen der passiven Metallspitze und der Probe immer noch die Basis der Abbildung. Zusätzlich wird jedoch ein nachgiebiges Element in den Tunnelkontakt eingefügt. Dieses Element wird so gewählt, dass es auf laterale Änderungen einer Probeneigenschaft, die aber nicht die LDOS ist, reagiert. Im vorliegenden Beispiel von atomar-geometrischem, chemischen STHM ist die lokale Pauliabstoßung die relevante Probeneigenschaft. Im Prinzip kann aber auch jede andere Eigenschaft gewählt werden. Wegen seiner Nachgiebigkeit ändert der Sensor durch einen passenden Signalwandlungsmechanismus die Leitfähigkeit des Kontakts. Im vorliegenden Fall erfolgt dies durch Polarisation der LDOS der Spitze, aber es sind auch andere Umwandlungsmechanismen vorstellbar. Es ist denkbar, dass die "STHM-Pauli Abstoßungs Mikroskopie" mit physisorbiertem Gas nur ein Beispiel einer großen Klasse von neuen STM Methoden ist.

Es versteht sich, dass die angegebenen Werte zu Abständen, Biasspannungen etc. lediglich beispielhaft sind und im Wesentlichen vom Experiment selbst abhängig sind.

Wie erwähnt dient der Sensor und Signalwandler S als echtes Kontrastmittel. Das Kontrastmittel wirkt passiv, das heißt es wird nicht an die Probe gebunden.

## Patentansprüche

1. Verfahren zur Messung der Kraftwechselwirkung, welche durch eine Probe hervorgerufen wird, wobei eine Spitze mit einer Biasspannung gegen die Probe beaufschlagt und, insbesondere in einem Rastertunnelmikroskop, in einem so geringen Abstand zu der Probe geführt wird, dass ein messbarer Strom zwischen der Spitze und der Probe fließt und ein Sensor S gebildet und im Bereich der Kraftwechselwirkung eingesetzt wird, wobei der Sensor S zugleich als Signalwandler ausgebildet wird, der aus einem zweiatomigen Molekül oder einem Heliumatom besteht, der den durch den Spitze-Probe-Kontakt fließenden Strom in Abhängigkeit von der Stärke der Kraftwechselwirkung verändert, **dadurch gekennzeichnet dass** die quantitative Messung der Kraftwechselwirkung auf die Messung des Stroms zurückgeführt wird, indem das Sensor-Signalwandlersystem mithilfe einer theoretischen Simulation kalibriert wird, oder indem der Sensor und Signalwandler S durch einmalige Verwendung eines dynamischen Rasterkraftmikroskops kalibriert wird.

2. Verfahren nach Anspruch 1,
**dadurch gekennzeichnet, dass**
die Spitze und die Probe koplanar auf einem Substrat angeordnet werden, wobei die Spitze insbesondere
• zu der Probe geführt werden kann, indem die Durchbiegung des Substrats aus seiner Ebene heraus verändert wird, und/oder
• in einem Bruchkontakt zu der Probe geführt werden kann.

3. Verfahren nach einem der vorhergehenden Ansprüche,
**dadurch gekennzeichnet, dass**
ein Sensor und Signalwandler S gebildet wird, der
• zumindest einen Teil des Stroms zwischen Spitze und Probe trägt und dessen Leitwert durch die Kraftwechselwirkung veränderlich ist, wobei der Leitwert insbesondere durch Änderung des effektiven Abstands des Sensors zur Probe verändert werden kann, und/oder der
• als Funktion der Kraftwechselwirkung den Leitwert des Spitze-Probe-Kontaktes verändert.

4. Verfahren nach einem der vorhergehenden Ansprüche,
**dadurch gekennzeichnet, dass**
der Strom, der Leitwert und / oder der differentielle Leitwert in Abhängigkeit des Abstands zwischen der Spitze und der Probe gemessen wird bzw. werden, wobei insbesondere zur Messung der Kraftwechselwirkung ausgewertet werden kann, inwieweit die Abhängigkeit des Stroms, des Leitwerts und / oder des differentiellen Leitwerts vom Abstand zwischen Spitze und Probe von der Exponentialform abweicht.

5. Verfahren nach einem der vorhergehenden Ansprüche,
**dadurch gekennzeichnet, dass**
die Abhängigkeit des Stroms, des Leitwerts und / oder des differentiellen Leitwerts von der Biasspannung gemessen wird und/oder dass der Durchgriff einer Veränderung der Kraftwechselwirkung auf den Einfluss des Sensor und Signalwandler S auf den Stromfluss über die Biasspannung eingestellt wird.

6. Verfahren nach einem der vorhergehenden Ansprüche,
**dadurch gekennzeichnet, dass**
die aus der Kraftwechselwirkung resultierende Veränderung des Stroms, des Leitwerts und / oder des differentiellen Leitwerts als Differenz dieser Messgrößen bei verschiedenen Biasspannungen gemessen wird.

7. Verfahren nach einem der vorhergehenden Ansprüche,
**dadurch gekennzeichnet, dass**
die Kraftwechselwirkung gemessen wird, nachdem sich in dem Spitze und Probe umfassenden Stromkreis symmetrisch um die Biasspannung Null für mindestens ein Biasspannungspaar aus einem positiven und einem negativen Wert ein Maximum oder ein Minimum im differentiellen Leitwert eingestellt hat.

8. Verfahren nach einem der vorhergehendem Ansprüche,
**dadurch gekennzeichnet, dass**
vor der Messung der Kraftwechselwirkung eine Biasspannung mit einem Betrag von 100 mV oder weniger gewählt wird und/oder dass während der Messung der Kraftwechselwirkung eine Biasspannung mit einem Betrag von 40mV oder weniger, bevorzugt mit einem Betrag von 10 mV, oder 5 mV, oder 1 mV oder weniger, gewählt wird.

9. Verfahren nach einem der vorhergehenden Ansprüche,
**dadurch gekennzeichnet, dass**
der Sensor und Signalwandler S an der Spitze und / oder an der Probe durch Adsorption, Physisorption, Kondensation und / oder Resublimation gebildet wird.

10. Verfahren nach einem der vorhergehenden Ansprüche,
**dadurch gekennzeichnet, dass**
ein Sensor und Signalwandler S gebildet wird, der
• mindestens ein aus zwei Atomen bestehendes Molekül und/oder mindestens ein Atom oder Molekül mit einer geschlossenen Schale umfasst und/oder der
• eine Kompressibilität aufweist und/oder der
• hohe Nullpunktschwingung ausführt.

11. Verfahren nach einem der vorhergehenden Ansprüche,
**dadurch gekennzeichnet, dass**
der Sensor und Signalwandler S aus Wasserstoff (H₂) oder Deuterium (D₂) oder CO oder einem anderen leichten Gas, wie z. B. Helium, gebildet wird und/oder dass er aus einem Gas gebildet wird, welches zur Spitze und/oder zur Probe geführt wird, während diese kälter ist als die Kondensations-, Adsorptions- und / oder Resublimationstemperatur des Gases.

12. Verfahren nach einem der vorhergehenden Ansprüche,
**dadurch gekennzeichnet, dass**
einer oder mehrere der vorherigen Schritte an lateral verschiedenen Positionen der Probe zur Erstellung von Kraftwechselwirkungskarten wiederholt wird bzw. werden und/oder dass die atomar-geometrische, chemische Struktur der Probe und / oder intermolekulare Bindungen nachgewiesen werden.

13. Verfahren nach einem der Ansprüche 1 - 12,
**dadurch gekennzeichnet,**
**dass** das Rastertunnelmikroskop in einem solchen Abstand zur Probe geführt wird, dass ein Tunnelkontakt entsteht.

14. Verfahren nach einem der Ansprüche 1 - 13,
**dadurch gekennzeichnet,**
**dass** der Sensor selbstjustierend gebildet wird.

## Claims

1. Method for measuring the force interaction, which is caused by a sample, in which a point with a bias voltage is applied against the sample and, particularly in a scanning tunnelling microscope, is brought to the sample at such a small distance from it that a current, which may be measured, flows between the point and the sample and a sensor S is formed and used in the area of the force interaction,
in which
the sensor S is made as a signal converter at the same time, which consists of a two-atom molecule or a helium atom, which changes the current flowing through the point-sample contact depending on the strength of the force interaction,
**characterised in that**
the quantitative measurement of the force interaction is traced back to the measurement of the current by the sensor signal converter system being calibrated using a theoretical simulation or by the sensor and signal converter S being calibrated by single use of a dynamic atomic force microscope.

2. Method according to claim 1,
**characterised in that**
the point and the sample are arranged coplanar on a substrate, in which the point in particular
• may be brought to the sample by the deflection of the substrate being changed out of its plane, and/or
• may be brought to the sample in a break contact.

3. Method according to one of the previous claims,
**characterised in that**
a sensor and signal converter S is formed, which
• carries at least a part of the current between point and sample and its conductance may be changed by the force interaction, in which conductance in particular may be changed by by the effective distance of the sensor to the sample, and/or which
• changes the conductance of the point-sample contact as a function of the force interaction.

4. Method according to one of the previous claims,
**characterised in that**
the current, conductance and / or differential conductance is measured depending on the distance between the point and the sample, in which, particularly for measuring the force interaction, it may be evaluated to what extent the dependence of the current, conductance and / or differential conductance on the distance between point and sample deviates from the exponential form.

5. Method according to one of the previous claims,
**characterised in that**
the dependence of the current, conductance and / or differential conductance of the bias voltage is measured and/or the reach of a change in the force interaction is adjusted to the influence of the sensor and signal converter S on the current flow through the bias voltage.

6. Method according to one of the previous claims,
**characterised in that**
the change in current, conductance and / or differential conductance resulting from the force interaction is measured as the difference in these variables with different bias voltages.

7. Method according to one of the previous claims,
**characterised in that**
the force interaction is measured after a maximum or a minimum in the differential conductance has been adjusted to the current circuit comprising the point and sample symmetrically around the bias voltage nil for at least one bias voltage pair made of a positive and a negative value.

8. Method according to one of the previous claims,
**characterised in that**
before measuring the force interaction a bias voltage is selected at an amount of 100 mV or less and/or whilst measuring the force interaction a bias voltage is selected at an amount of 40 mV or less, preferably at an amount of 10 mV or 5 mV or 1 mV or less.

9. Method according to one of the previous claims,
**characterised in that**
the sensor and signal converter S is formed on the point and / or on the sample through adsorption, physisorption, condensation and / or resublimation.

10. Method according to one of the previous claims,
**characterised in that**
a sensor and signal converter S is formed, which
• comprises at least one molecule consisting of two atoms and/or at least one atom or molecule with a closed shell and/or which
• has compressibility and/or which
• carries out high zero point vibration.

11. Method according to one of the previous claims,
**characterised in that**
the sensor and signal converter S is formed of hydrogen (H₂) or deuterium (D₂) or CO or another light gas, such as helium for example, and/or it is formed from a gas, which is brougt to the point and/or the sample, whilst it is colder than the condensation, adsorption and / or resublimation temperature of the gas.

12. Method according to one of the previous claims,
**characterised in that**
one or several of the previous steps is repeated with laterally different positions of the sample to produce force interaction maps and/or the atomic geometric, chemical structure of the sample and / or intermolecular bonds are demonstrated.

13. Method according to one of claims **1 - 12,**
**characterised in that**
the scanning tunnelling microscope is brought to such a distance from the sample that a tunnel contact occurs.

14. Method according to one of claims **1 - 13,**
**characterised in that**
the sensor is made self adjusting.

## Revendications

1. Procédé de mesure de l'interaction provoquée par un échantillon, dans lequel on alimente une pointe en une tension de polarisation par rapport à l'échantillon et, notamment dans un microscope à balayage à effet tunnel, à une distance si petite de l'échantillon, qu'il passe un courant mesurable entre la pointe et l'échantillon et on forme un capteur S et on l'insère dans la région de l'interaction,
dans lequel
on constitue le capteur S en même temps en transducteur de signal constitué d'une molécule biatomique ou d'un atome d'hélium, qui modifie le courant passant par le contact pointe-échantillon en fonction de l'intensité de l'interaction,
**caractérisé**
**en ce que** l'on rapporte la mesure quantitative de l'interaction à la mesure du courant en étalonnant le système capteur-transducteur de signal à l'aide d'une simulation théorique ou en étalonnant le capteur et le transducteur de signal S par utilisation une seule fois d'un microscope à balayage à effet tunnel dynamique.

2. Procédé suivant la revendication 1,
**caractérisé en ce que**
on met la pointe et l'échantillon de manière coplanaire sur un substrat, la pointe pouvant notamment
• être guidée vers l'échantillon, en modifiant la section du substrat hors de son plan, et/ou
• guidée vers l'échantillon suivant un contact de rupture.

3. Procédé suivant l'une des revendications précédentes,
**caractérisé en ce que**
on forme un capteur et un transducteur de signal S, qui
• porte au moins une partie du courant entre la pointe et l'échantillon et dont la conductance peut être modifiée par l'interaction, la conductance pouvant être modifiée, notamment en modifiant la distance effective du capteur à l'échantillon et/ou qui
• modifie la conductance du contact pointe-échantillon en fonction de l'interaction.

4. Procédé suivant l'une des revendications précédentes,
**caractérisé en ce que**
l'on mesure le courant, la conductance et/ou la conductance différentielle en fonction de la distance entre la pointe et l'échantillon en pouvant exploiter notamment, pour mesurer l'interaction, dans quelle mesure la variation du courant de la conductance et/ou de la conductance différentielle en fonction de la distance entre la pointe et l'échantillon s'écarte de la forme exponentielle.

5. Procédé suivant l'une des revendications précédentes,
**caractérisé en ce que**
on mesure la variation du courant de la conductance et/ou de la conductance différentielle en fonction de la tension de polarisation et/ou **en ce que** l'on règle, par la tension de polarisation, l'effet d'une modification de l'interaction sur l'influence du capteur et du transducteur de signal S sur le flux de courant.

6. Procédé suivant l'une des revendications précédentes,
**caractérisé en ce que**
l'on mesure à des tensions de polarisation différentes, la modification provenant de l'interaction, du courant, de la conductance et/ou de la conductance différentielle sous la forme d'une différence de ces grandeurs de mesure.

7. Procédé suivant l'une des revendications précédentes,
**caractérisé en ce que**
l'on mesure l'interaction après que s'est établi un maximum ou un minimum de la conductance différentielle dans un circuit de courant comprenant la pointe et l'échantillon, symétriquement autour de la tension de polarisation zéro pour au moins une paire de tensions de polarisation composée d'une valeur positive et d'une valeur négative.

8. Procédé suivant l'une des revendications précédentes,
**caractérisé en ce que**
avant la mesure de l'interaction, on choisit une tension de polarisation d'une valeur absolue inférieure ou égale à 100 mV et/ou **en ce que** pendant la mesure de l'interaction, on choisit une tension de polarisation d'une valeur absolue inférieure ou égale à 40 mV, de préférence d'une valeur absolue inférieure ou égale à 10 mV, ou à 5 mV, ou à 4 mV.

9. Procédé suivant l'une des revendications précédentes,
**caractérisé en ce que**
on forme le capteur ou le transducteur de signal S à la pointe et/ou sur l'échantillon par adsorption, physisorption, condensation et/ou resublimation.

10. Procédé suivant l'une des revendications précédentes,
**caractérisé en ce que**
on forme un capteur et un transducteur de signal S, qui
• comprend au moins une molécule constituée de deux atomes et/ou au moins un atome ou une molécule ayant une couche fermée et/ou
• a de la compressibilité et/ou qui
• effectue une vibration au point zéro.

11. Procédé suivant l'une des revendications précédentes,
**caractérisé en ce que**
on forme le capteur et le transducteur de signal S à partir d'hydrogène (H₂) ou deutérium (D₂) ou de CO ou d'un autre gaz léger, comme par exemple d'hélium et/ou on le forme à partir d'un gaz que l'on envoie à la pointe et/ou à l'échantillon pendant que celui-ci est plus froid que la température de condensation, d'adsorption et/ou de resublimation du gaz.

12. Procédé suivant l'une des revendications précédentes,
**caractérisé en ce que**
l'on répète un ou plusieurs des stades précédents en des positions différentes latéralement de l'échantillon pour établir des cartes d'interaction et/ou on **en ce qu'**on met en évidence la structure de géométrie atomique, chimique de l'échantillon et/ou des liaisons intermoléculaires.

13. Procédé suivant l'une des revendications 1 à 12,
**caractérisé**
**en ce que** l'on fait passer le microscope à balayage à effet tunnel à une distance telle de l'échantillon, qu'il se créé un contact à effet tunnel.

14. Procédé suivant l'une des revendications 1 à 13,
**caractérisé**
**en ce que** l'on forme le capteur de manière autoréglable.
